(19) **Europäisches Patentamt / European Patent Office / Office européen des brevets**

(11) **EP 4 471 399 B1**

(12) **EUROPEAN PATENT SPECIFICATION**

(45) Date of publication and mention
of the grant of the patent:
**10.06.2026 Bulletin 2026/24**

(21) Application number: **23746784.0**

(22) Date of filing: **18.01.2023**

(51) International Patent Classification (IPC):
**G01M 11/02** *(2006.01)*     **G01M 11/08** *(2006.01)*
**G01M 11/00** *(2006.01)*     **G02B 6/38** *(2006.01)*
**G02B 6/02** *(2006.01)*      **G02B 6/32** *(2006.01)*
**H04B 10/2581** *(2013.01)*

(52) Cooperative Patent Classification (CPC):
**G02B 6/32; G01M 11/0221; G01M 11/088;
G01M 11/33; G02B 6/02047; G02B 6/385;
G02B 6/3853; H04B 10/2581**

(86) International application number:
**PCT/JP2023/001329**

(87) International publication number:
**WO 2023/145570 (03.08.2023 Gazette 2023/31)**

(54) **DETERMINATION DEVICE, DETERMINATION METHOD, AND PROGRAM**

BESTIMMUNGSVORRICHTUNG, BESTIMMUNGSVERFAHREN UND PROGRAMM

DISPOSITIF DE DÉTERMINATION, PROCÉDÉ DE DÉTERMINATION ET PROGRAMME

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **28.01.2022 JP 2022011810**

(43) Date of publication of application:
**04.12.2024 Bulletin 2024/49**

(73) Proprietor: **Sony Group Corporation
Tokyo 108-0075 (JP)**

(72) Inventors:
• **MORITA, Hiroshi**
  **Tokyo 108-0075 (JP)**
• **TOBA, Kazuaki**
  **Tokyo 108-0075 (JP)**
• **YAMAMOTO, Masanari**
  **Tokyo 108-0075 (JP)**

(74) Representative: **D Young & Co LLP
3 Noble Street
London EC2V 7BQ (GB)**

(56) References cited:
**WO-A1-2018/131700     WO-A1-2021/095702
WO-A1-2021/095702     CN-A- 110 926 758
CN-A- 110 926 758     US-A- 5 200 795
US-A- 5 200 795     US-A1- 2019 339 061
US-A1- 2020 217 750     US-A1- 2022 390 674**

EP 4 471 399 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

[Technical Field]

The present technology relates to a determination apparatus, a determination method, and a program, and, in particular, to a determination apparatus and the like that determine whether or not the light diameter of collimated light is within a defined range in a double mode.

[Background Art]

Optical communication through spatial coupling has already been known. In this case, light emitted from an optical fiber on a transmission side, for example, is formed into collimated light by a lens, the collimated light is emitted from the lens, and then, the collimated light is collected and condensed by a lens on a reception side, and enters an optical fiber. In the case of this optical communication, particularly in the case of single-mode fibers, misalignment could cause a significant loss in optical power. Hence, high precision has been required for components to prevent misalignment, which leads to an increase in cost.

The present applicant has previously proposed an optical communication apparatus that is able to reduce accuracy against misalignment to achieve a cost reduction, i.e., an optical communication apparatus supporting what is generally called a double mode (see PTL 1). This optical communication apparatus has an optical waveguide that propagates only a fundamental mode at a first wavelength, and performs communication using light that has a second wavelength and has components of the fundamental mode and at least a first-order mode, the second wavelength being a wavelength that allows the optical waveguide to propagate at least the first-order mode along with the fundamental mode.

[Citation List]

[Patent Literature]

[PTL 1]
PCT Publication No. WO2020/153236

[Summary]

[Technical Problem]

In the optical communication through spatial coupling, it is important to determine whether or not the light diameter of collimated light is within a defined range to reject nonconforming items, in guaranteeing communication quality. In the case where it is to be determined whether or not the light diameter of collimated light is within a defined range in the double mode, it is impossible to determine whether or not the light diameter of the collimated light is within the defined range from, for example, a 1/e^2 line unlike in the case of a common single mode, because a light intensity distribution profile of the collimated light depends on the ratio of the fundamental mode to the first-order mode and the state of a light intensity distribution on an output end surface of an optical waveguide.

An object of the present technology is to make it possible to satisfactorily determine whether or not the light diameter of collimated light is within a defined range in the double mode.

Prior art includes: WO 2021/095702 A1, US 2019/339061 A1, US 2020/217750 A1, CN 110 926 758 A and US 5 200 795 A.

In particular, WO 2021/095702 A1 discloses a light-emitting element and an optical waveguide that propagates light from the light-emitting element. For example, the optical waveguide is an optical fiber or a silicon optical waveguide. The light that is propagated through the optical waveguide includes components of the fundamental mode and the first-order mode, and the light is propagated through the optical waveguide with a light intensity distribution in which regions having high intensities appear alternately in one direction and another direction with respect to the center of a core along the optical waveguide, the other direction opposite to the one direction. The light intensity distribution at the output end face of the optical waveguide corresponds to an intermediate position between a first position and a second position, the first position being a position where a region having a high intensity is present in the one direction and the second position being a position where a region having high intensity is present in the other direction.

Furthermore, US 2019/339061 A1 discloses that an optical axis or a diameter of light of even a light beam having a non-uniform intensity distribution can be stably obtained. An outer shape of a range of a light intensity having a specified ratio with respect to a total light intensity on a cross-section of a light beam is obtained. An approximate circle is obtained from this outer shape. For example, the approximate circle is calculated by using the least-squares method. An optical axis and/or a diameter of light of the light beam is obtained on the basis of this approximate circle.

[Solution to Problem]

The invention is defined by the appended claims.

[Brief Description of Drawings]

[FIG. 1]

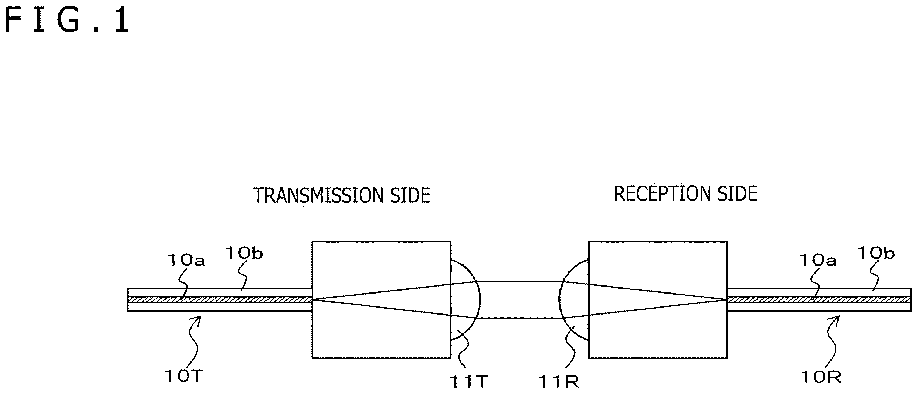

FIG. 1 is a diagram illustrating an outline of optical communication through spatial coupling.
[FIG. 2]

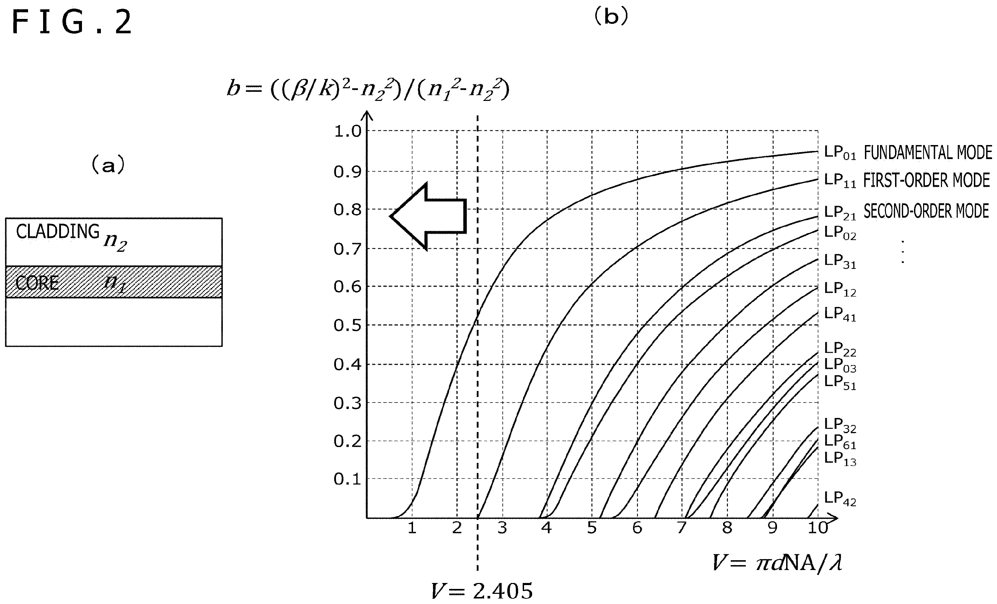

FIG. 2 represents diagrams illustrating a basic structure of an optical fiber and LPml modes of a step-index optical fiber.

[FIG. 3]

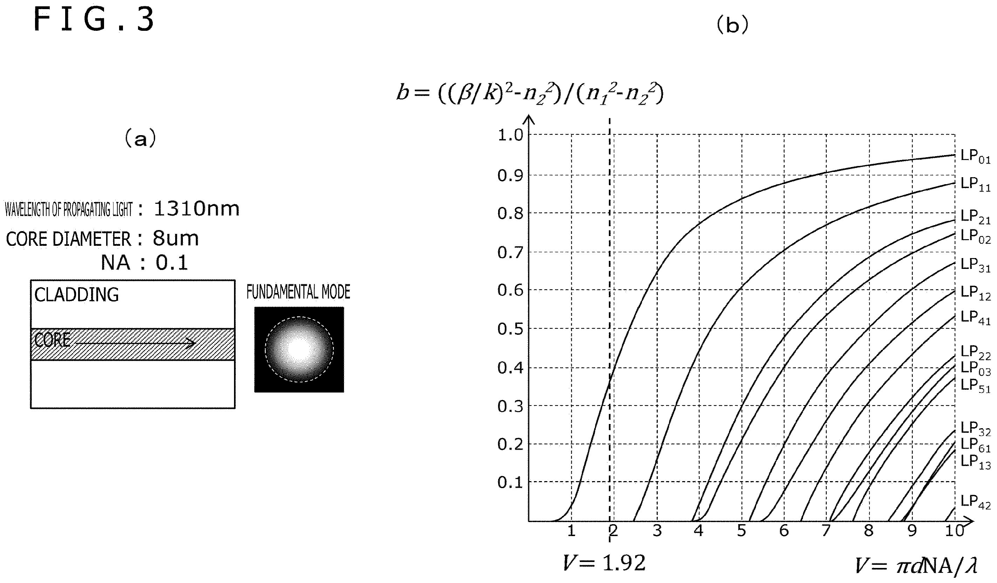

FIG. 3 represents diagrams in a case where a normalized frequency V in the case of 1310 nm, which is common in a single mode, is examined.

[FIG. 4]

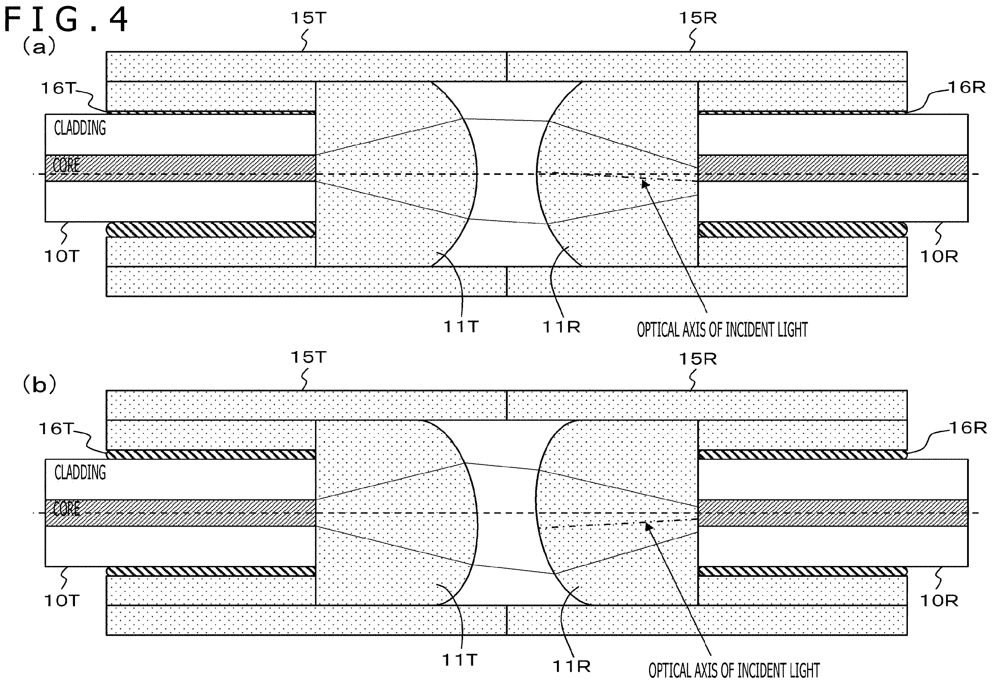

FIG. 4 represents diagrams illustrating examples of factors in reduced accuracy in optical axis alignment.

[FIG. 5]

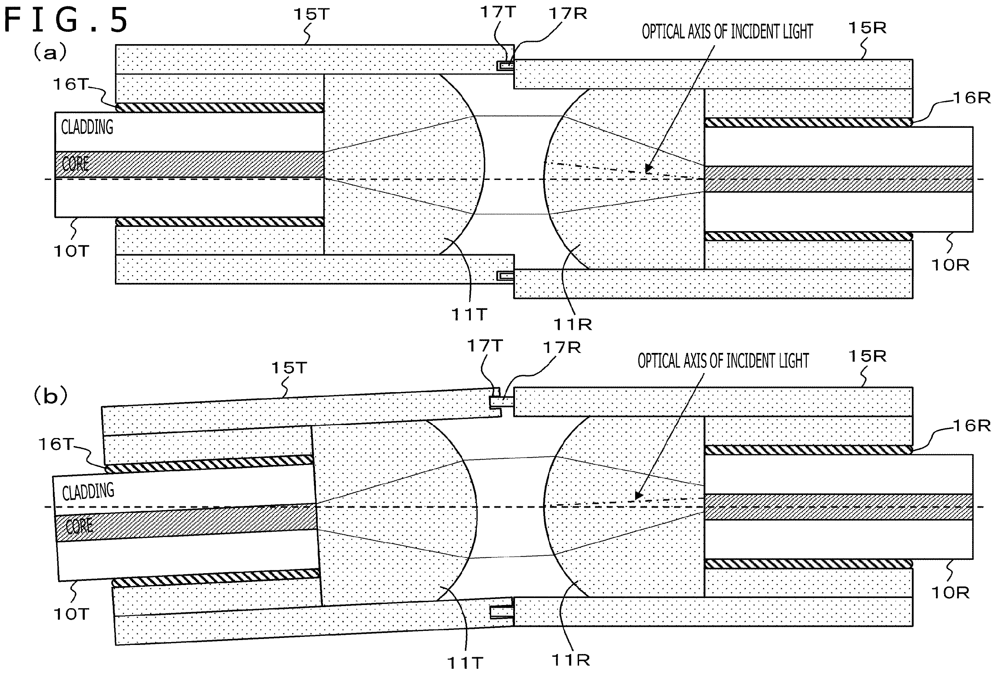

FIG. 5 represents diagrams illustrating other examples of the factors in reduced accuracy in optical axis alignment.

[FIG. 6]

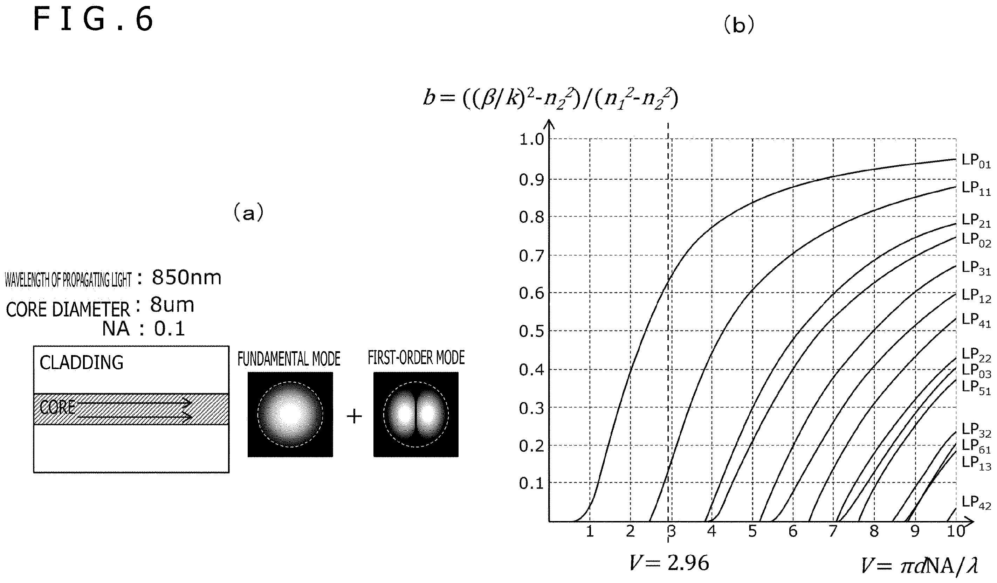

FIG. 6 represents diagrams for explaining that there can be a fundamental mode of LP01 and a first-order mode of LP11 in a case where light of a wavelength of 850 nm is inputted to a 1310 nm single-mode fiber.

[FIG. 7]

FIG. 7 represents diagrams for examining a case where optical axis misalignment has occurred on the condition that there is only the fundamental mode of LP01 in input light.

[FIG. 8] FIG. 8 is a graph depicting a simulation result concerning the amounts of loss in a case where the input light has wavelengths of 1310 nm and 850 nm.

[FIG. 9]

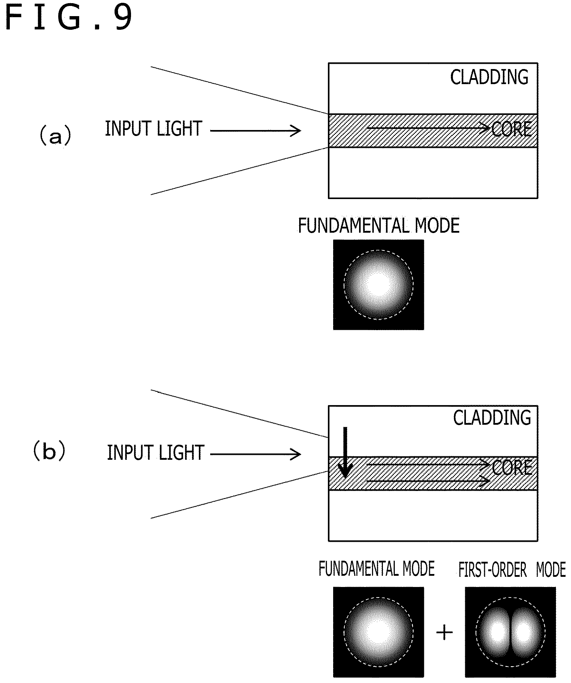

FIG. 9 represents diagrams indicating that, while there is only the fundamental mode in the input light in a state in which there is no optical axis misalignment, a portion of the fundamental mode is converted to the first-order mode in a state in which there is optical axis misalignment.

[FIG. 10]

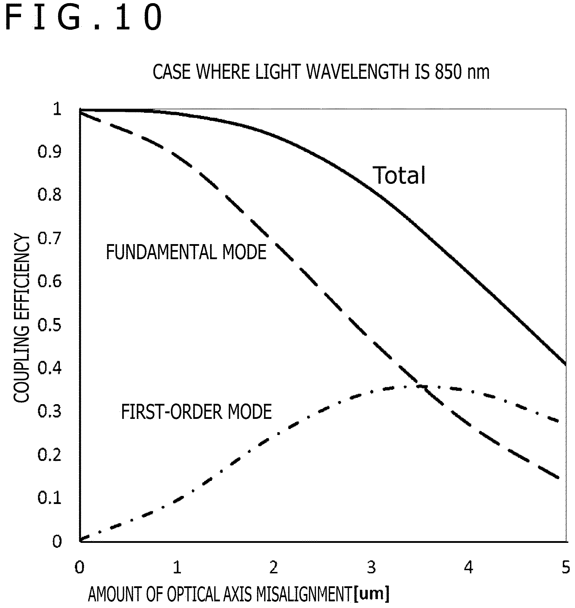

FIG. 10 is a graph for explaining that the fundamental mode is converted to the first-order mode according to misalignment.

[FIG. 11]

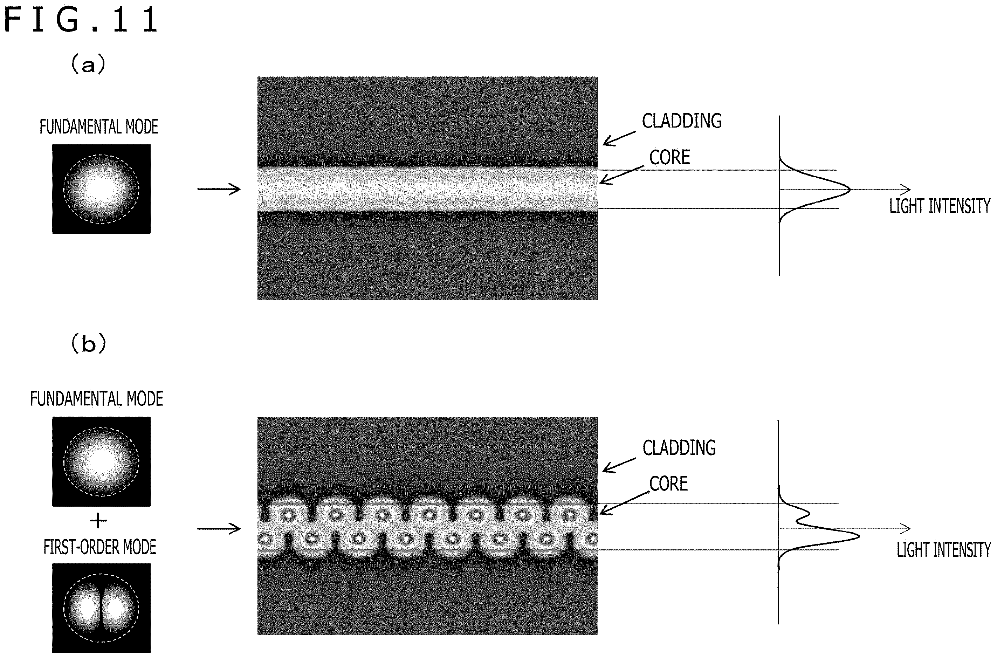

FIG. 11 represents diagrams of simulation of an intensity distribution of light transferred in an optical fiber.

[FIG. 12]

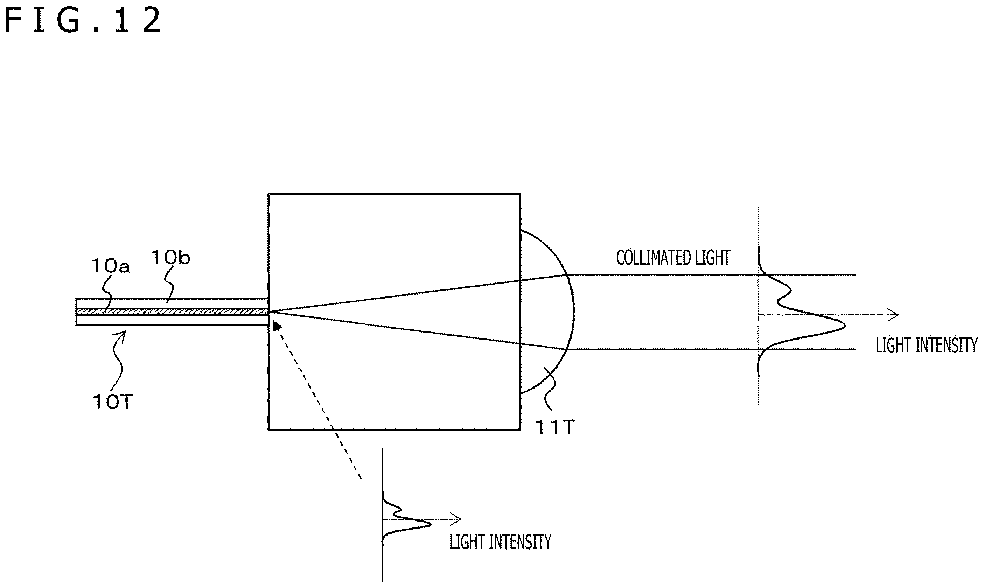

FIG. 12 is a diagram illustrating an example of a light intensity distribution profile in a case where light exiting from an output end surface of an optical fiber is formed into collimated light and emitted.

[FIG. 13]

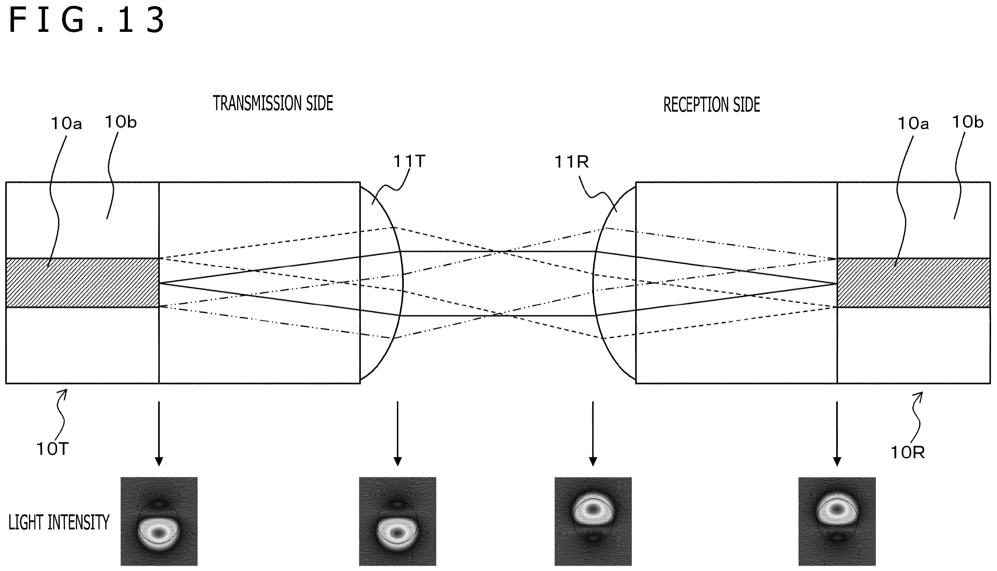

FIG. 13 is a diagram illustrating details of light paths in the spatial coupling and examples of light intensity distributions at various positions.

[FIG. 14]

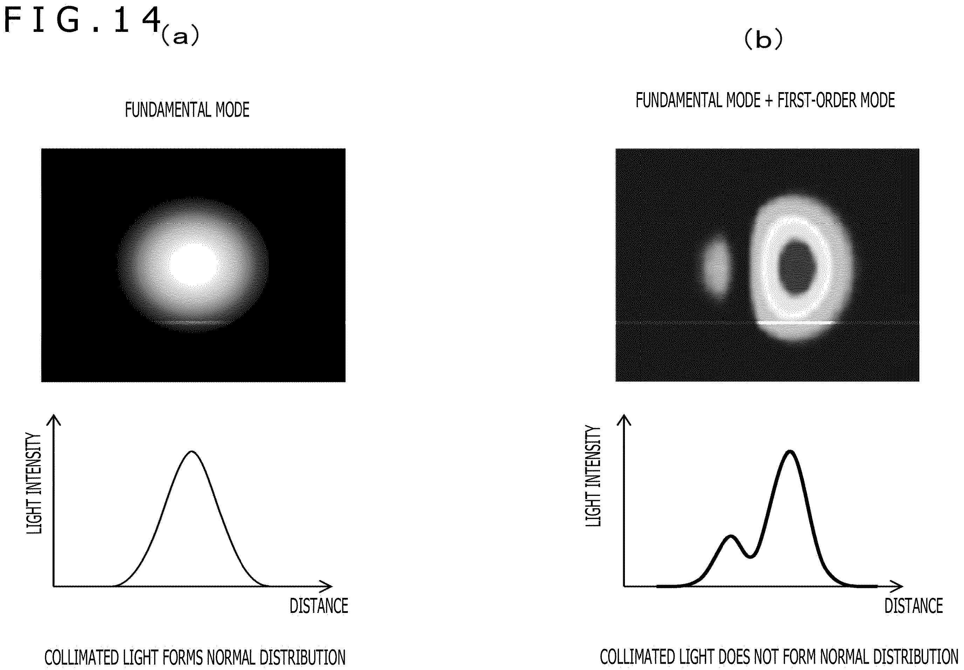

FIG. 14 represents diagrams illustrating examples of light intensity distributions of collimated light in the single mode and a double mode.

[FIG. 15]

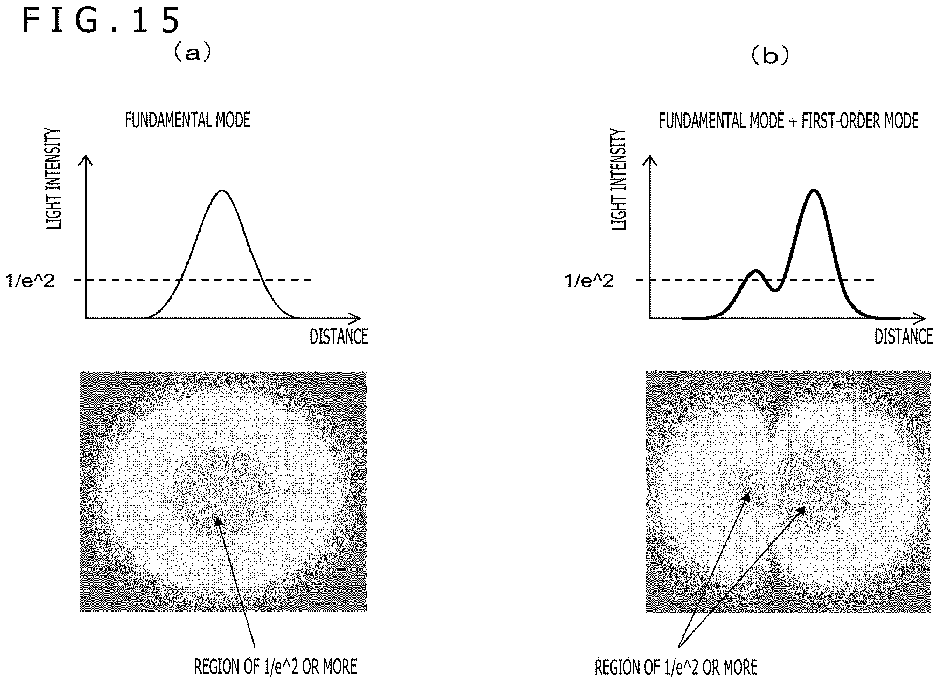

FIG. 15 represents diagrams illustrating light intensity distributions in the single mode and the double mode in which regions are colored differently with use of a light intensity value of $1/e^2$ ($\approx 0.135$) as a threshold value.

[FIG. 16]

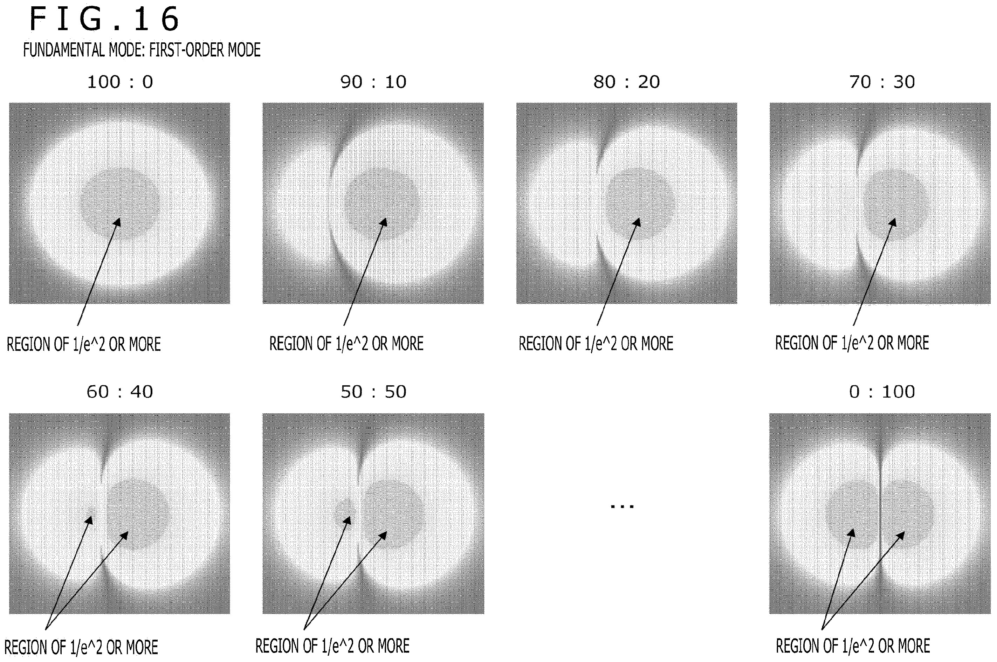

FIG. 16 represents diagrams illustrating light intensity distributions in a case where the ratio of the fundamental mode to the first-order mode is varied, in which regions are colored differently with use of a light intensity value of $1/e^2$ as a threshold value.

[FIG. 17]

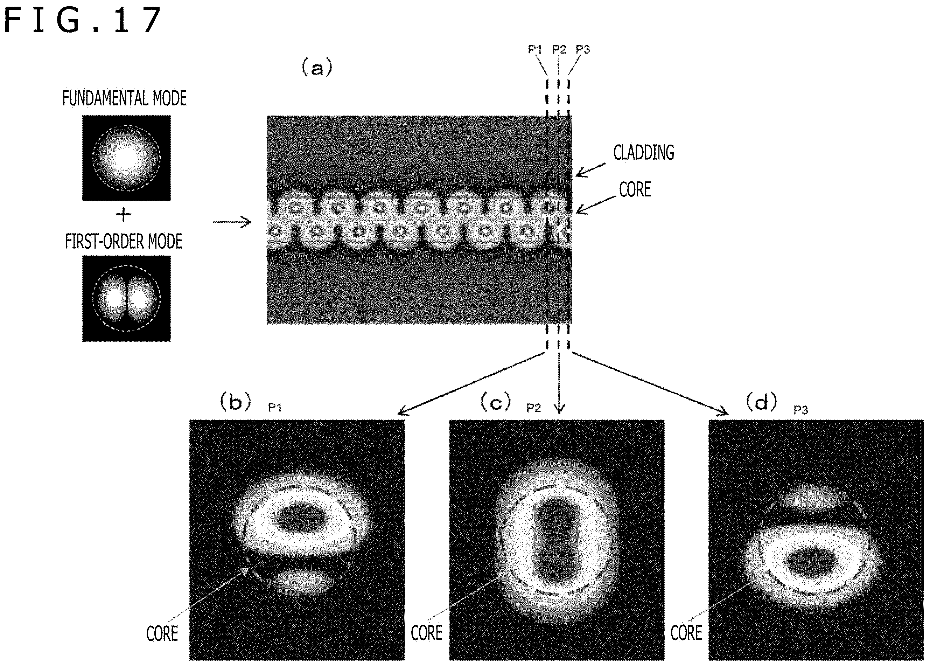

FIG. 17 represents, for example, diagrams of simulation of a light intensity distribution in a case where light that has components of the fundamental mode and the first-order mode is transferred in an optical fiber.

[FIG. 18]

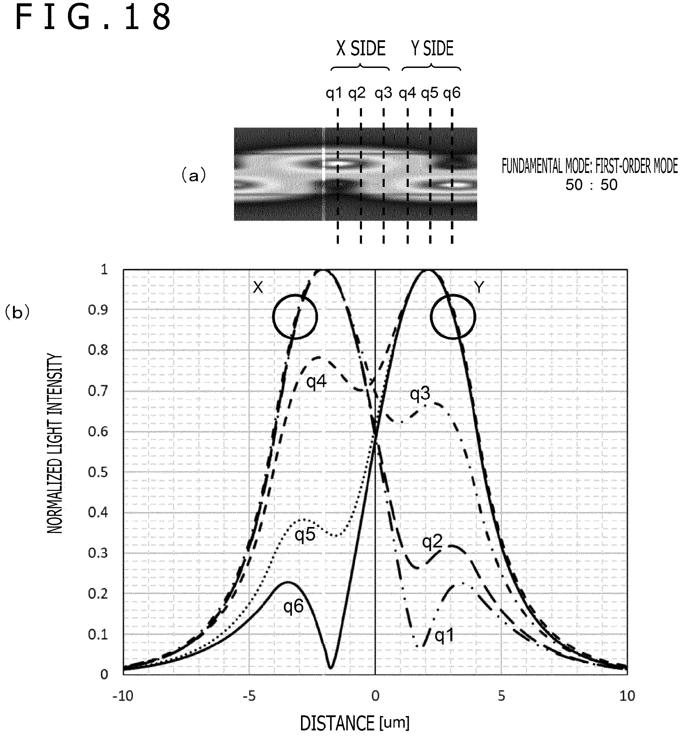

FIG. 18 represents diagrams illustrating graphs of light intensity distributions on six cross-sections labelled q1 to q6 in transition of a light intensity distribution in an optical fiber.

[FIG. 19]

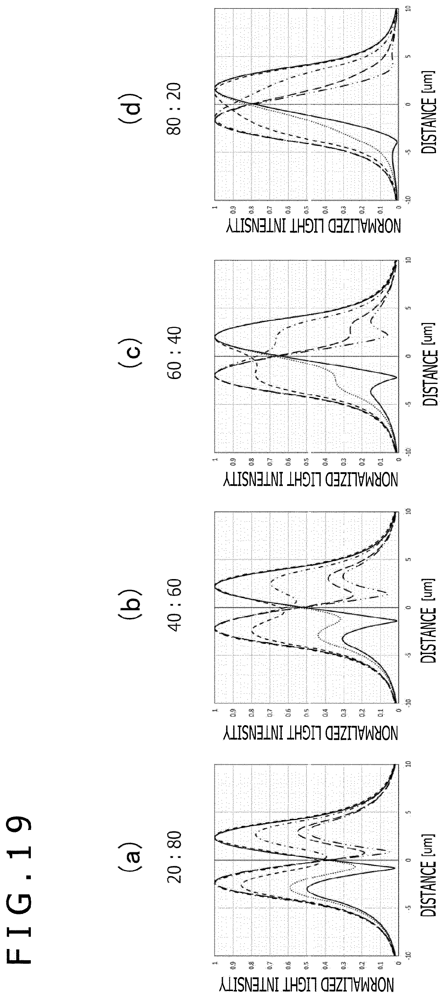

FIG. 19 represents diagrams illustrating graphs of light intensity distributions on the six cross-sections labelled q1 to q6 in the transition of the light intensity distribution in the optical fiber in the case of various mode ratios of the fundamental mode to the first-order mode.

[FIG. 20]

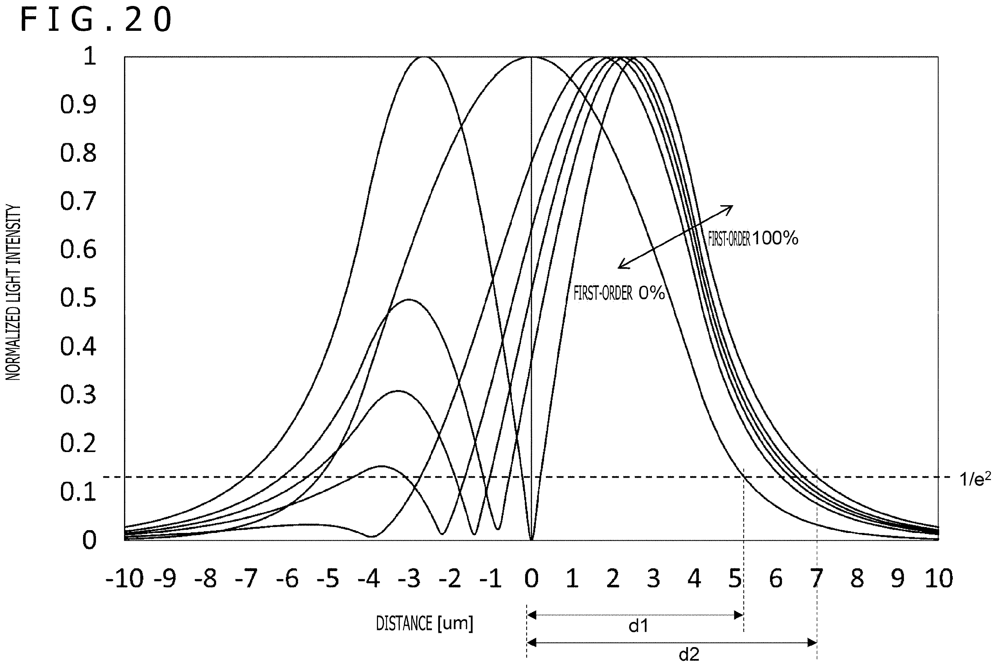

FIG. 20 is a graph in which light intensity distributions that exhibit high intensities on a positive side along a horizontal axis in various mode ratios are superimposed.

[FIG. 21]

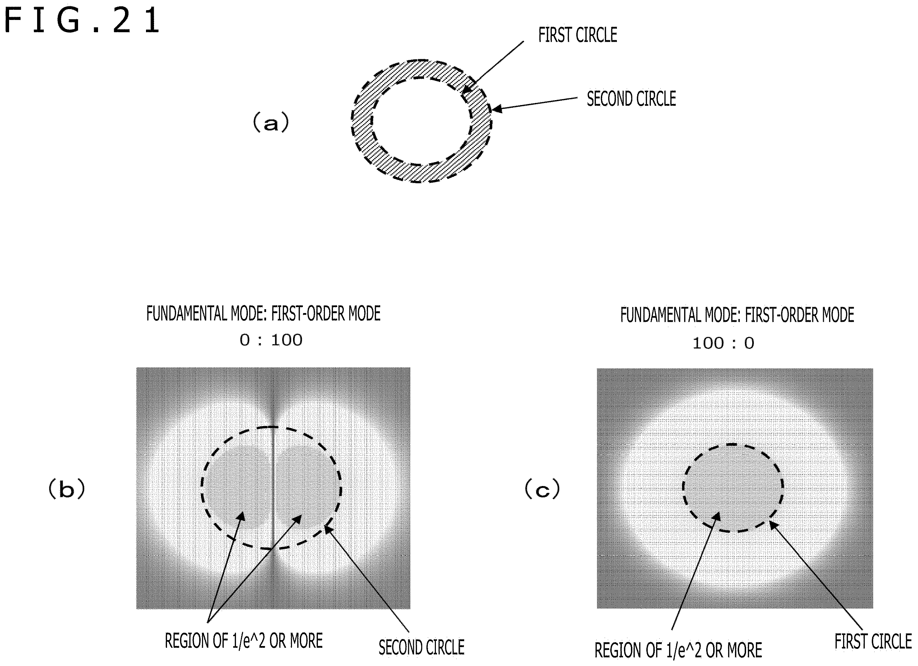

FIG. 21 represents diagrams for explaining an annular region between a first circle and a second circle larger than the first circle, the annular region corresponding to a defined range.

[FIG. 22]

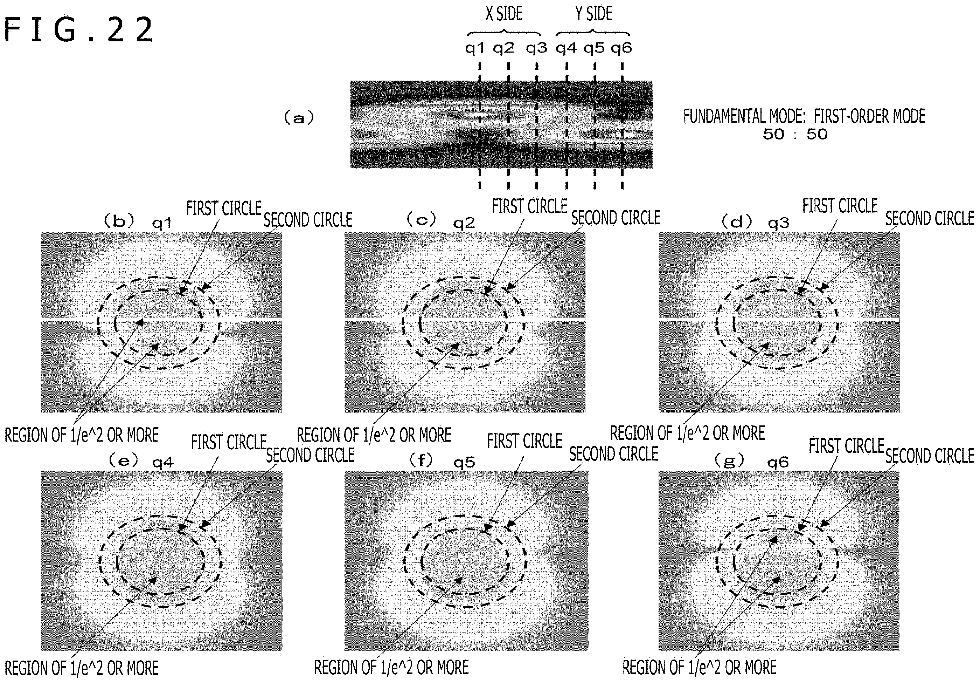

FIG. 22 represents diagrams illustrating light intensity distributions on the six cross-sections labelled q1 to q6 in the transition of the light intensity distribution in the optical fiber in the case of various mode ratios, in which regions are colored differently with use of a light intensity value of $1/e^2$ as a threshold value.

[FIG. 23]

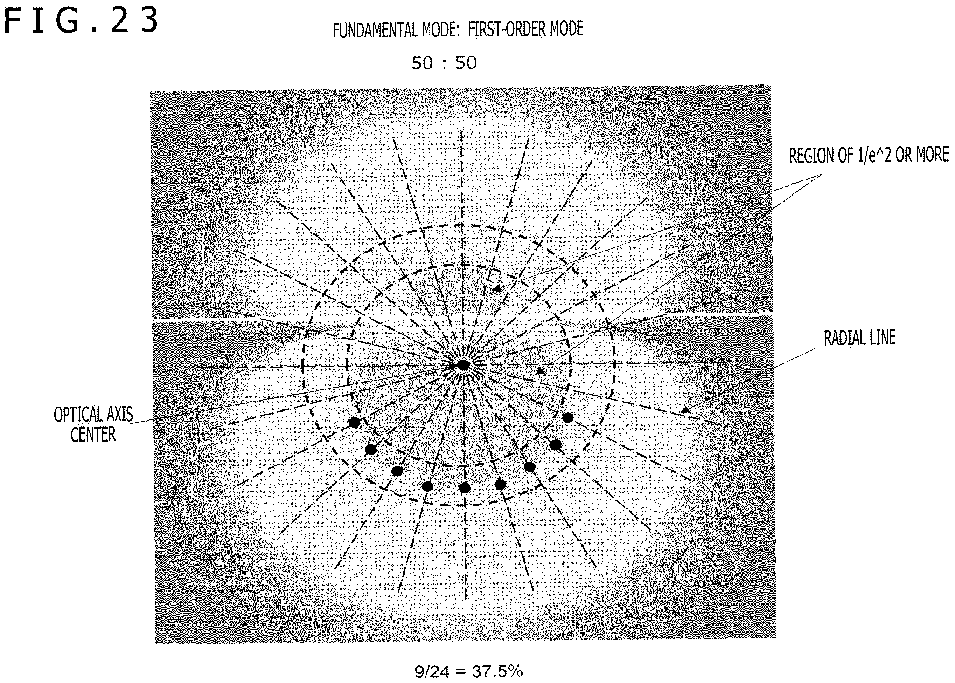

FIG. 23 is a diagram for explaining an example case where multiple radial lines extending radially from an optical axis center of collimated light and arranged at regular intervals in a circumferential direction are defined, and the ratio of those of the multiple radial lines which have a point of intersection with, for example, a $1/e^2$ line in the annular region to all of the multiple radial lines is calculated as the ratio of inclusion of a light intensity line in the annular region.

[FIG. 24]

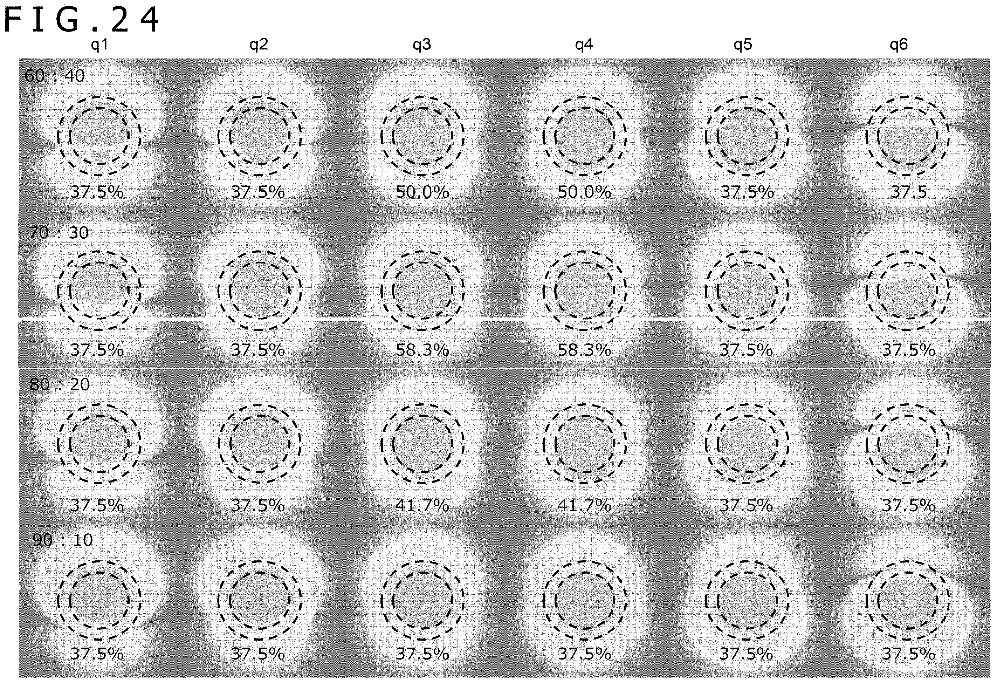

FIG. 24 is a diagram illustrating light intensity distributions on the six cross-sections labelled q1 to q6 in the case of various mode ratios, in which regions are colored differently with use of a light intensity value of 1/e^2 as a threshold value.
[FIG. 25]

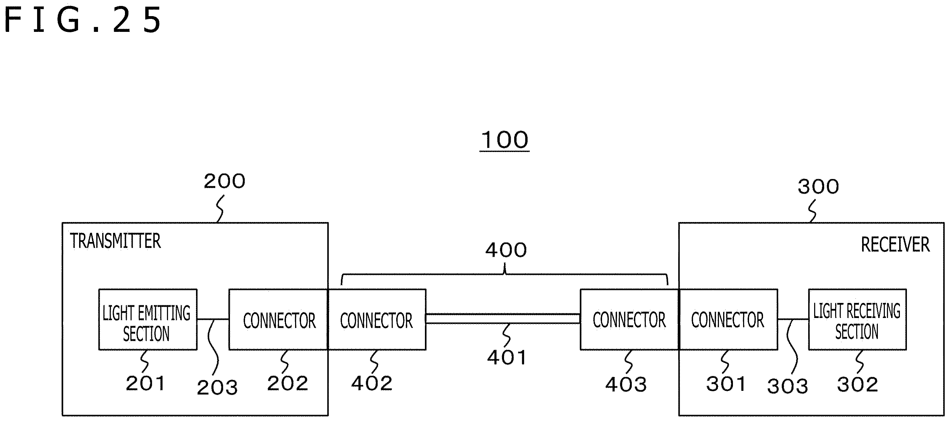

FIG. 25 is a diagram illustrating an example structure of an optical communication system that is able to guarantee communication quality through application of the present technology.
[FIG. 26]

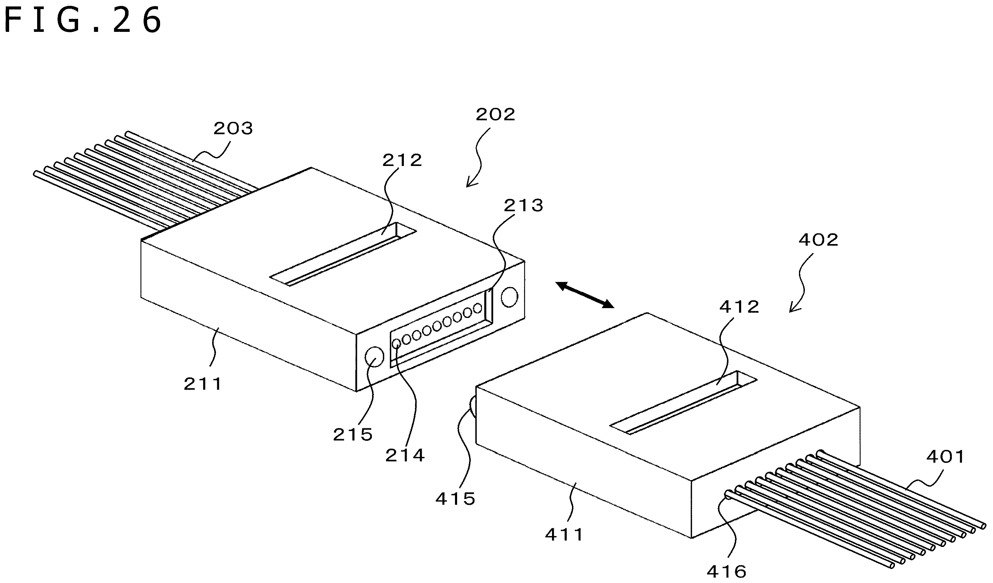

FIG. 26 is a perspective view illustrating example structures of a connector of a transmitter and a connector of a cable.
[FIG. 27]

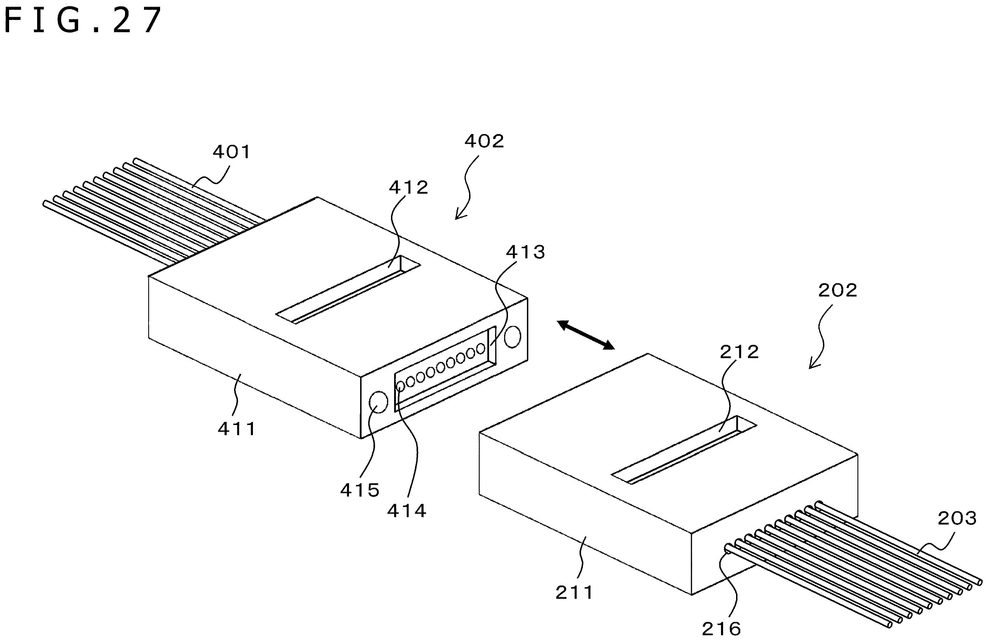

FIG. 27 is a perspective view illustrating the example structures of the connector of the transmitter and the connector of the cable.
[FIG. 28]

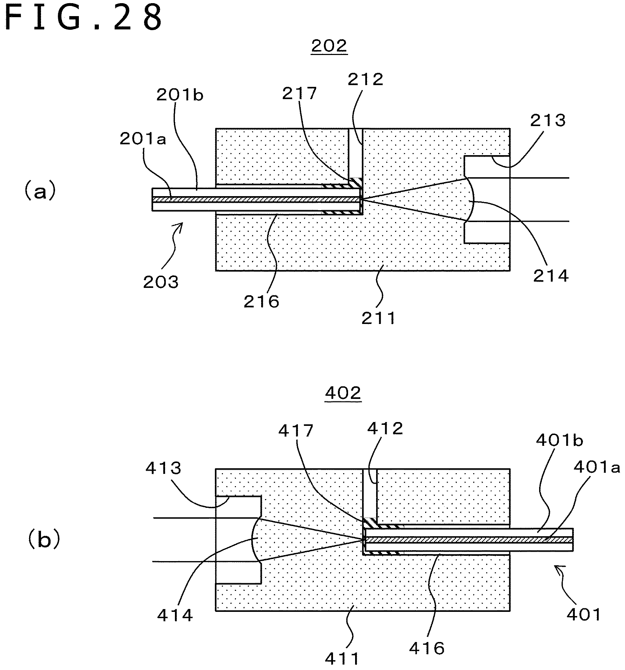

FIG. 28 represents sectional views illustrating examples of the connector of the transmitter and the connector of the cable.
[FIG. 29]

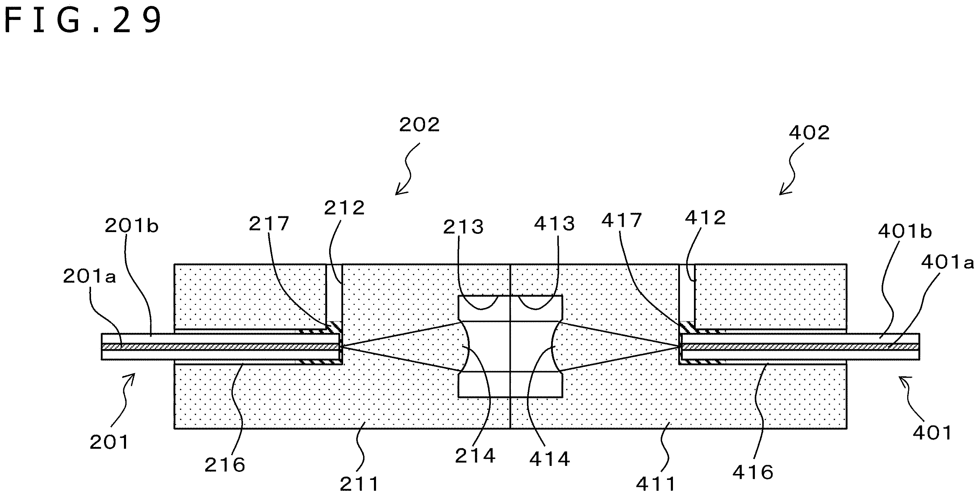

FIG. 29 is a sectional view illustrating the connector of the transmitter and the connector of the cable connected to each other.
[FIG. 30]

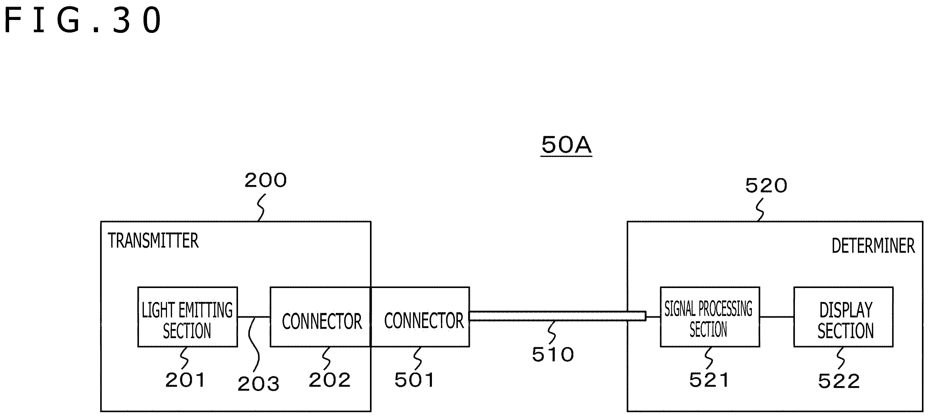

FIG. 30 is a diagram illustrating an example structure of a determination system that makes a determination as to the light diameter of collimated light that is emitted from the connector of the transmitter.
[FIG. 31]

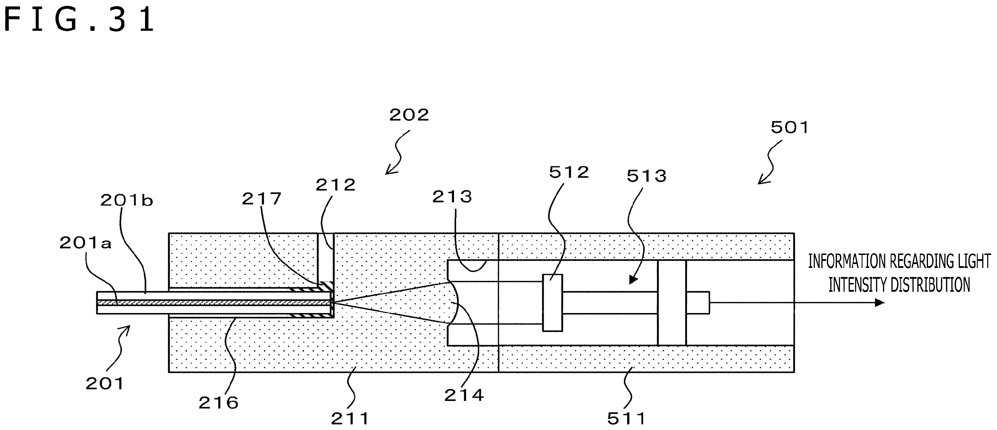

FIG. 31 is a diagram illustrating a state in which the connector of the transmitter and a connector of a cable connected to a determiner are connected to each other.
[FIG. 32]

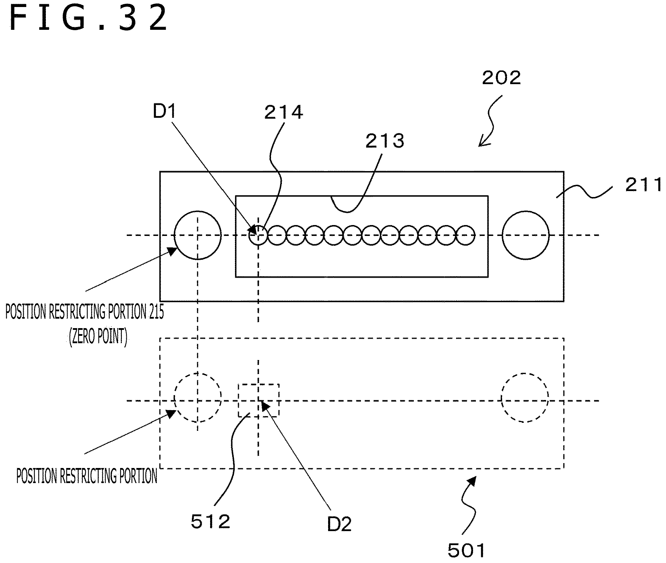

FIG. 32 is a diagram for explaining an example way to determine the optical axis center of collimated light.
[FIG. 33]

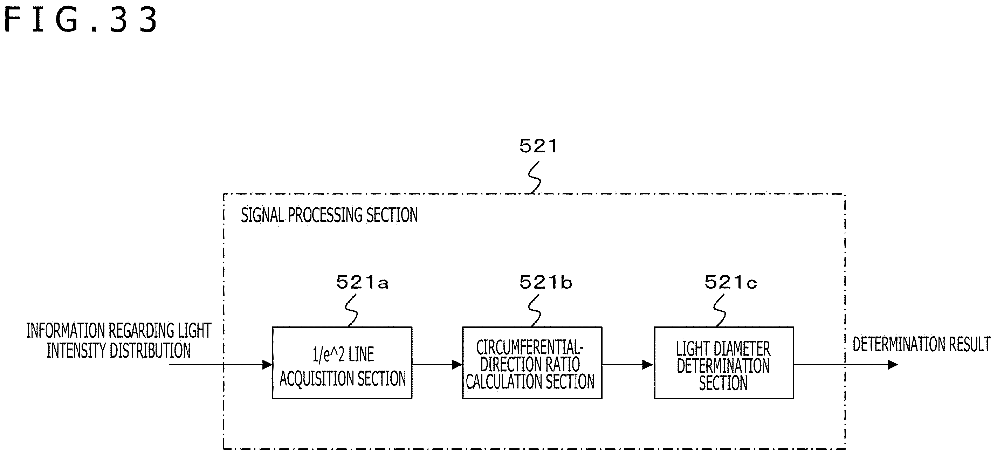

FIG. 33 is a diagram illustrating examples of functional blocks of a signal processing section.
[FIG. 34]

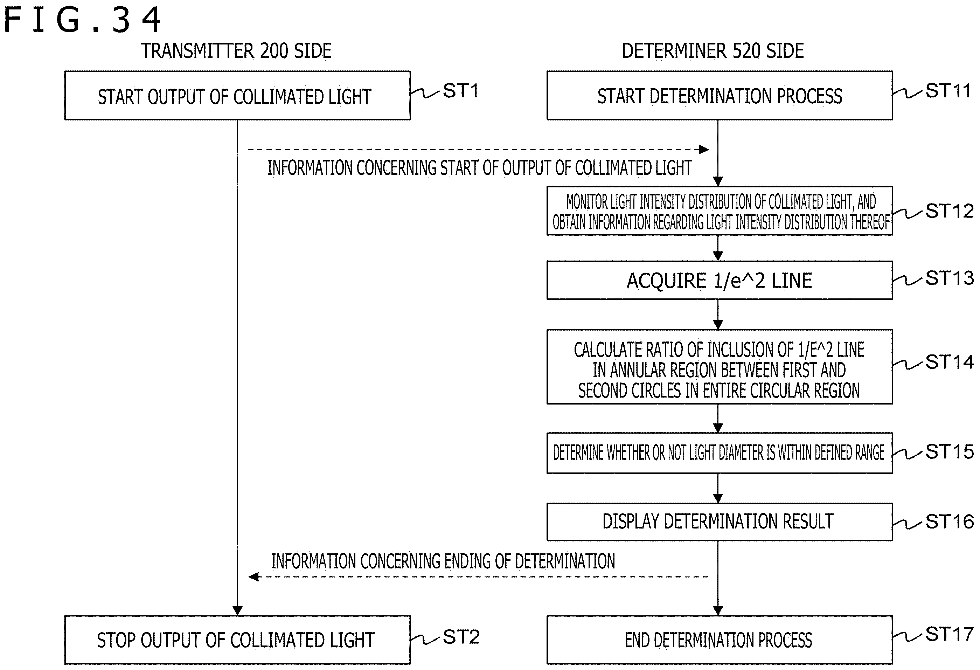

FIG. 34 is a flowchart illustrating examples of processing procedures performed at the transmitter and the determiner when a determination is made by the determiner.
[FIG. 35]

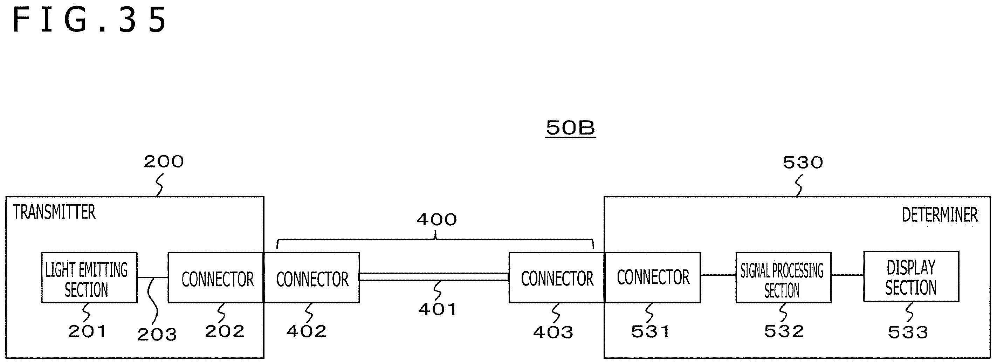

FIG. 35 is a diagram illustrating an example structure of a determination system that makes a determination as to the light diameter of collimated light that is emitted from the connector of the cable.
[FIG. 36]

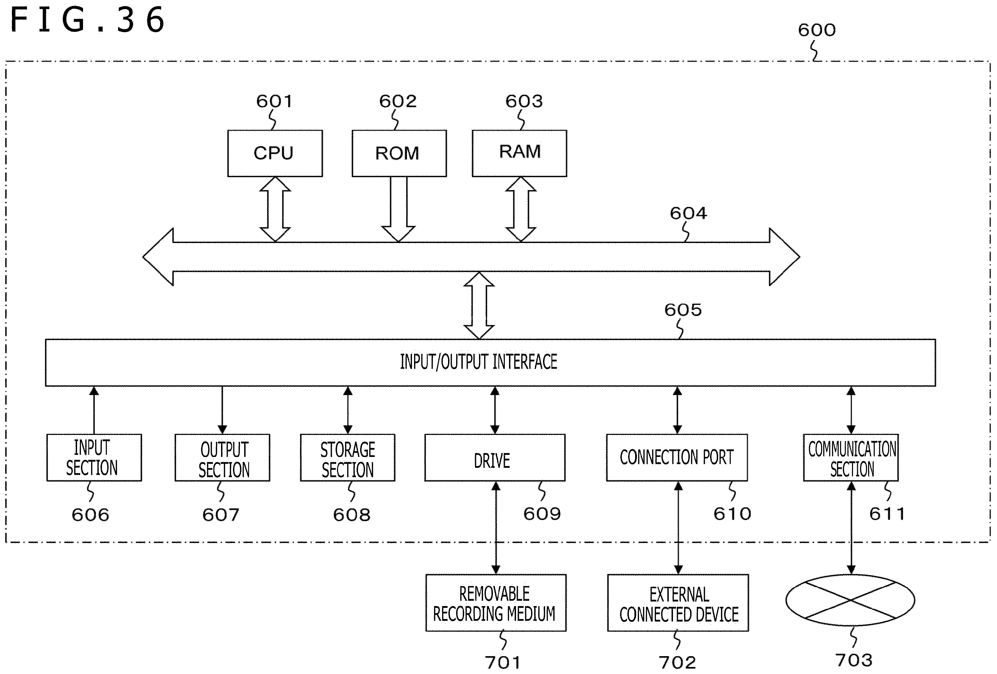

FIG. 36 is a block diagram illustrating an example hardware configuration of a computer.

[Description of Embodiments]

Hereinafter, modes for carrying out the invention (hereinafter referred to as an "embodiments") will be described. Note that descriptions will be provided in the following order.

1. Embodiments
2. Example modifications

<1. Embodiments>

[Description of technology related to embodiments]

First, a technology related to the embodiments will be described below. FIG. 1 illustrates an outline of optical communication through spatial coupling. In this case, light emitted from an optical fiber 10T on a transmission side is formed into collimated light by a lens 11T, and the collimated light is emitted from the lens 11T. Then, the collimated light is collected and condensed by a lens 11R on a reception side, and enters an optical fiber 10R. In the case of this optical communication, particularly in the case of single-mode fibers, misalignment could cause a significant loss in optical power. Note that each of the optical fibers 10T and 10R has a two-layer structure including a core 10a in a center, which forms a light path, and a cladding 10b, which covers a peripheral surface of the core 10a.
Next, a basic concept of modes will be described below. In the case where propagation through an optical fiber in a single mode is intended, it is necessary to determine such parameters as the refractive index and core diameter of the fiber such that there is only one mode.
FIG. 2(a) illustrates a basic structure of an optical fiber. The optical fiber has a structure in which a center portion called a core is covered with a layer called a cladding. In this case, a refractive index n1 of the core is set to be high, and a refractive index n2 of the cladding is set to be low, so that light propagates while being confined in the core.
FIG. 2(b) illustrates LPml (Linearly Polarized) modes of a step-index optical fiber, where a normalized propagation constant b is given in the form of a function of a normalized frequency V. The vertical axis represents the normalized propagation constant b, and b = 0 when a given mode does not pass (i.e., is blocked), while b approaches 1 as optical power that is confined in the core (i.e., that can be propagated) increases. The horizontal axis represents the normalized frequency V, which is given by Eq. (1) below. Here, d is the core diameter, NA is the numerical aperture, and $\lambda$ is the wavelength of light.

$$V = \pi dNA / \lambda \quad (1)$$

For example, when V = 2.405, LP11 is blocked, with the result that only LP01 exists as a mode. Accordingly, a state in which V is equal to or smaller than 2.405 corresponds to the single mode. Here, LP01 is a fundamental mode (i.e., a zero-order mode), and LP11, LP21, and so on are a first-order mode, a second-order mode, and so on.

For example, the normalized frequency V in the case of 1310 nm, which is common in the single mode, as illustrated in FIG. 3(a) will be examined. Here, when the core diameter d and the numerical aperture NA are assumed to be d = 8 μm and NA = 0.1, respectively, which are typical parameters for a 1310 nm optical fiber, and the wavelength of light that propagates through the fiber is assumed to be 1310 nm, Eq. (1) gives V = 1.92.

Accordingly, as illustrated in FIG. 3(b), the normalized frequency V is equal to or smaller than 2.405, allowing only the fundamental mode of LP01 to propagate, resulting in the single mode. Here, as the core diameter is increased, the number of modes that can propagate will increase. Incidentally, for example, a typical multi-mode fiber is arranged to have a core diameter of, for example, 50 μm to allow hundreds of modes to propagate therethrough.

In the case where optical communication through spatial coupling as illustrated in FIG. 1 is considered, the single mode has a problem in that alignment between optical coupling portions on the transmission and reception sides is tough due to a small core diameter, requiring high precision for accurate optical axis alignment.

To overcome this problem, typically, high-precision components are used, or a portion of an optical fiber at which light enters the optical fiber is processed to facilitate insertion of light into a core of the fiber. However, high-precision components involve a high cost, and a high cost of processing is incurred when processing is required, so that connectors and systems for single-mode communication typically involve a high cost.

FIGS. 4 and 5 illustrate examples of factors in reduced accuracy in optical axis alignment. For example, as illustrated in FIG. 4(a), optical axis misalignment may occur due to unevenness in the amounts of fixing materials 16T and 16R for fixing ferrules 15T and 15R to the optical fibers 10T and 10R. In addition, for example, as illustrated in FIG. 4(b), optical axis misalignment may occur due to insufficient accuracy in shaping the lenses 11T and 11R.

Further, as illustrated in FIGS. 5(a) and 5(b), optical axis misalignment may occur due to insufficient accuracy in alignment mechanisms (i.e., a recessed portion 17T and a projecting portion 17R) provided in the ferrules 15T and 15R. Note that the projecting portion 17R illustrated in FIGS. 5(a) and 5(b) may be a pin.

The present technology is a technology that makes it possible to satisfactorily determine whether or not the light diameter of collimated light is within a defined range in a double mode.

Here, an optical communication apparatus supporting the double mode has an optical waveguide that propagates only the fundamental mode at a first wavelength, and performs communication using light that has a second wavelength and has components of the fundamental mode and at least the first-order mode, the second wavelength being a wavelength that allows the optical waveguide to propagate at least the first-order mode along with the fundamental mode.

The optical communication apparatus supporting the double mode will now be described. For example, in the case where light of a wavelength of 850 nm, instead of 1310 nm, is inputted to an optical fiber with the same conditions as those of FIG. 3(a), the normalized frequency V is 2.96 as illustrated in FIG. 6(b). Accordingly, there can be the fundamental mode of LP01 and the first-order mode of LP11 as illustrated in FIG. 6(a).

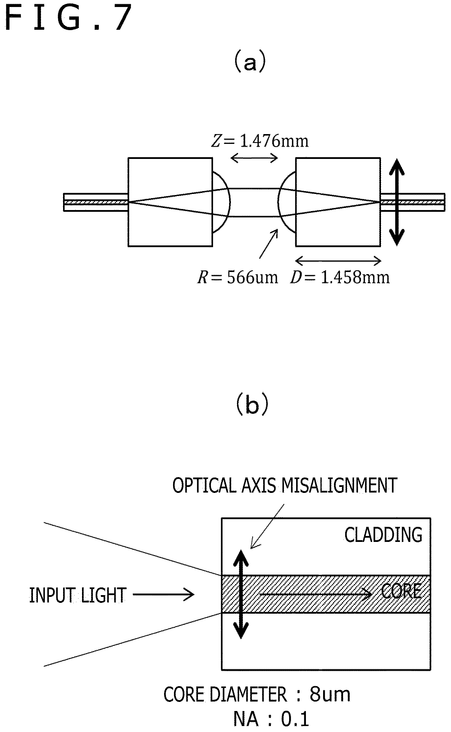

Examined will be a case where, when an optical system as the one illustrated in FIG. 7(a) is assembled, the position of an optical fiber on the reception side has been displaced in a vertical direction with respect to an optical axis (see arrows in FIGS. 7(a) and 7(b)), that is, optical axis misalignment has occurred, on the condition that there is only the fundamental mode of LP01 in input light.

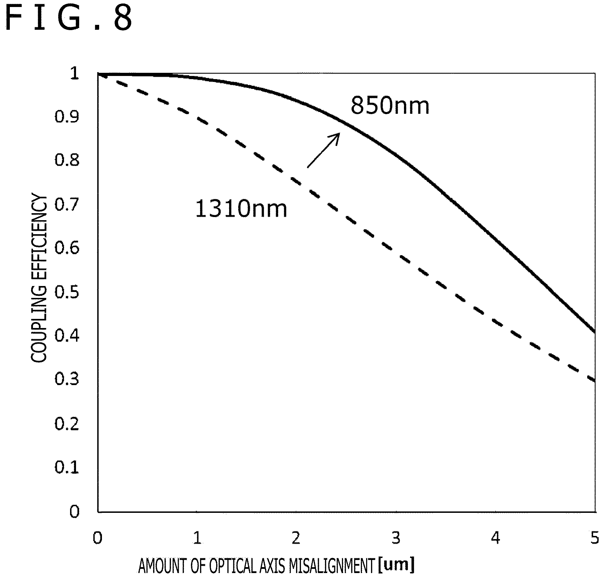

FIG. 8 is a graph depicting a simulation result concerning optical power coupling efficiency in this case. The horizontal axis represents the amount of optical axis misalignment, while the vertical axis represents the coupling efficiency. In a state in which there is no misalignment, 100% of power propagates into the optical fiber, resulting in a coupling efficiency of **1.** Further, in the case where only 50% of power of the input light propagates into the optical fiber, for example, the coupling efficiency is 0.5.

When 1310 nm and 850 nm as wavelengths of the input light are compared with each other, it is found that better characteristics are exhibited in the case of 850 nm. This is because only the fundamental mode can be propagated in the case of 1310 nm, while not only the fundamental mode but also the first-order mode can be propagated in the case of 850 nm (see FIG. 6(a)).

That is, in the state in which there is no optical axis misalignment, there is only the fundamental mode in the input light as illustrated in FIG. 9(a). Meanwhile, in a state in which there is optical axis misalignment, a portion of the fundamental mode is converted to the first-order mode through a phase difference caused by a difference in refractive index between the cladding and the core as illustrated in FIG. 9(b). This first-order mode cannot be propagated in the case of 1310 nm, but in the case of 850 nm, this first-order mode can also be propagated, resulting in better characteristics in the case of 850 nm.

In a graph of FIG. 10, a fundamental mode (zero-order mode) component and a first-order mode component are depicted separately, and a sum of the components is represented by a curve labelled Total. It will be understood that the fundamental mode is converted to the first-order mode according to misalignment, since there is only the fundamental mode in the input light. Meanwhile, in the case of 1310 nm, only the fundamental mode can be propagated as illustrated in FIG.

3(a), and accordingly, the fundamental mode is purely reduced as illustrated in FIG. 8.

It can be seen from FIG. 8 that the accuracy against misalignment can be reduced by a factor of approximately 1.8 when 1310 nm and 850 nm are compared with each other at a coupling efficiency of 0.8 (approximately -1 dB), and can be reduced by a factor of approximately 2.35 when 1310 nm and 850 nm are compared with each other at a coupling efficiency of 0.9 (approximately -0.5 dB).

Thus, an increase in optical power coupling efficiency can be achieved by arranging the optical fiber to be capable of propagating only the fundamental mode at the first wavelength (e.g., 1310 nm), and arranging communication to be performed using light of the second wavelength (e.g., 850 nm), which allows the optical fiber to propagate at least the first-order mode along with the fundamental mode.

FIGS. 11(a) and 11(b) are each a diagram of simulation of an intensity distribution of light transferred in an optical fiber. FIG. 11(a) illustrates an example case where light that has only a component of the fundamental mode is transferred. In this case, light intensity is greatest at a center of the core of the optical fiber, and the intensity decreases with decreasing distance from the cladding. Note that a light intensity distribution depicted on the right side represents a light intensity distribution on an output end surface of the optical fiber.

FIG. 11(b) illustrates an example case where light that has components of the fundamental mode and the first-order mode is transferred. In this case, regions with high intensity appear alternately on one side and the other side, i.e., on an upper side and a lower side in the illustrated example, of the center of the core. Note that a light intensity distribution depicted on the right side represents a light intensity distribution on the output end surface of the optical fiber.

FIG. 12 illustrates an example of a light intensity distribution profile in the case where light exiting from an output end surface of the optical fiber 10T is formed into collimated light by the lens 11T and the collimated light is emitted from the lens 11T. In this case, the light propagates through a space while a light intensity distribution profile on the output end surface of the optical fiber 10T is maintained, and therefore, a light intensity distribution profile of the collimated light is similar thereto.

FIG. 13 illustrates details of light paths in the spatial coupling and examples of light intensity distributions at various positions. In this figure, portions that have corresponding portions in FIG. 1 are assigned the same reference signs as those of the corresponding portions. Light exiting from a center of the core 10a of the optical fiber 10T on the transmission side spreads at a certain angle as represented by solid lines, is collimated by the lens (i.e., a collimating lens) 11T on the transmission side, and is collected and condensed by the lens (i.e., a condensing lens) 11R on the reception side to be focused on a center of the core 10a of the optical fiber 10R on the reception side.

Meanwhile, light exiting from an upper end, in the figure, of the core 10a of the optical fiber 10T on the transmission side spreads at a certain angle as represented by broken lines, and a light path thereof is changed by the lens (i.e., the collimating lens) 11T on the transmission side. The light then travels obliquely downward because a light source thereof is displaced from an ideal point at the center of the core, and is collected and condensed by the lens (i.e., the condensing lens) 11R on the reception side to be focused on a lower end of the core 10a of the optical fiber 10R on the reception side.

Similarly, light exiting from a lower end, in the figure, of the core 10a of the optical fiber 10T on the transmission side spreads at a certain angle as represented by two-dot chain lines, and a light path thereof is changed by the lens (i.e., the collimating lens) 11T on the transmission side. The light then travels obliquely upward because a light source thereof is displaced from the ideal point at the center of the core, and is collected and condensed by the lens (i.e., the condensing lens) 11R on the reception side to be focused on an upper end of the core 10a of the optical fiber 10R on the reception side.

In this case, the profile of a light intensity distribution on the output end surface of the optical fiber 10T on the transmission side is maintained until the light reaches the lens (i.e., the collimating lens) 11T on the transmission side, but the profile thereof is inverted before the light arrives at the lens (i.e., the condensing lens) 11R on the reception side after penetrating the lens (i.e., the collimating lens) 11T.

FIGS. 14(a) and 14(b) illustrate examples of light intensity distributions of collimated light in the single mode and the double mode. FIG. 14(a) illustrates a light intensity distribution of collimated light in the case of the single mode, which involves only the fundamental mode, and it can be recognized therefrom that this light intensity distribution has the shape of a normal distribution. FIG. 14(b) illustrates a light intensity distribution of collimated light in the case of the double mode, which involves the fundamental mode and the first-order mode, and it can be recognized therefrom that this light intensity distribution does not have the shape of a normal distribution.

FIGS. 15(a) and 15(b) illustrate light intensity distributions in the single mode and the double mode in which regions are colored differently with use of a light intensity value of $1/e^2$ ($\approx 0.135$) as a threshold value. Regions where the light intensity is equal to or greater than $1/e^2$ are depicted in gray in the vicinity of a center, and white portions outside thereof represent regions where the light intensity is less than $1/e^2$. In addition, regions where the light intensity is zero are outside of the white portions.

As illustrated in FIG. 15(a), in the case of the light intensity distribution of the collimated light in the case of the single mode, which involves only the fundamental mode, it is common practice to determine the light diameter of the collimated light from a circle of a line (hereinafter referred to as a "1/e^2 line" as appropriate) corresponding to 1/e^2 of the light intensity distribution. In contrast, as illustrated in FIG. 15(b), in the case of the double mode, which involves the fundamental mode and the first-order mode, a line corresponding to 1/e^2 of the light intensity distribution is not circular unlike in the case where only the fundamental mode is involved, and it is not possible to determine the light diameter of the collimated light from a line corresponding to 1/e^2.

Meanwhile, FIG. 16 illustrates light intensity distributions in the case where the ratio of the fundamental mode to the first-order mode is varied, in which regions are colored differently with use of a light intensity value of 1/e^2 as a threshold value. In the illustrated examples, numbers in "100:0" and so on represent the percentages of the fundamental mode and the first-order mode in percentage terms. Thus, it has been found that the shape of a line(s) corresponding to 1/e^2 of the light intensity distribution varies depending on the ratio of the fundamental mode to the first-order mode as well.

Meanwhile, similarly to FIG. 11(b) described above, FIG. 17(a) is a diagram of simulation of a light intensity distribution in the case where light that has components of the fundamental mode and the first-order mode (the ratio of the fundamental mode to the first-order mode is 50:50) is transferred in an optical fiber. FIGS. 17(b), 17(c), and 17(d) illustrate light intensity distributions on an output end surface of the optical fiber in the case where the optical fiber is cut at positions P1, P2, and P3, respectively. Note that a circle represented by a broken line in each of FIGS. 17(b), 17(c), and 17(d) represents an outer circumference of a core.

The light intensity distribution on the output end surface of the optical fiber varies depending on the state of propagation of light in the optical fiber. That is, the light intensity distribution on the output end surface of the optical fiber can be any of the light intensity distributions of FIGS. 17(b), 17(c), and 17(d). Note that, although it is assumed in FIG. 17 that the ratio of the fundamental mode to the first-order mode is 50:50 as mentioned above, the light intensity distribution on the output end surface of the optical fiber similarly varies depending on the state of propagation of light in the optical fiber even in the case where the ratio of the fundamental mode to the first-order mode is different.

As described above, in the double mode, the light intensity distribution profile of the collimated light depends on the ratio between the modes and the state of the intensity distribution on the output end surface of the optical fiber, and therefore, it is not possible to determine whether or not the diameter of the collimated light is within a defined range from the shape of a line corresponding to 1/e^2 of the light intensity distribution unlike in the case of the common single mode. In the case where it is not possible to determine whether or not the diameter of the collimated light is within the defined range in the double mode, it is not possible to reject nonconforming items, making it impossible to guarantee communication quality in a transmission/reception system.

The present technology is a technology that makes it possible to satisfactorily determine whether or not the light diameter of collimated light is within a defined range in the double mode regardless of the ratio between the modes and the state of the intensity distribution on the output end surface of the optical fiber.

Similarly to FIG. 17(a) described above, FIG. 18(a) is a diagram of simulation of a light intensity distribution in the case where light that has components of the fundamental mode and the first-order mode (the ratio of the fundamental mode to the first-order mode is 50:50) is transferred in an optical fiber.

FIG. 18(b) illustrates graphs of light intensity distributions on six cross-sections labelled q1 to q6 in transition of the light intensity distribution in the optical fiber in FIG. 18(a). The horizontal axis represents the position in a direction perpendicular to an axial direction of the optical fiber, i.e., in the vertical direction in the illustrated example, while the vertical axis represents normalized light intensity.

In this case, in the case of the three cross-sections on an X side, where high light intensities are observed on the upper side in the transition of the light intensity in FIG. 18(a), it can be recognized that the highest light intensity appears on a negative side relative to a center (0) in the graphs illustrated in FIG. 18(b), and with increasing distance therefrom, the light intensity gradually decreases, with similar curves drawn for all of the three light intensity distributions. In contrast, in the case of the three cross-sections on a Y side, where high light intensities are observed on the lower side in the transition of the light intensity in FIG. 18(a), it can be recognized that the highest light intensity appears on a positive side relative to the center (0) in the graphs illustrated in FIG. 18(b), and with increasing distance therefrom, the light intensity gradually decreases, with similar curves drawn for all of the three light intensity distributions.

Here, although the intensity distribution should naturally be observed at a collimating portion, this would involve a wider analysis range and require more time for simulation, and therefore, the horizontal axis in each of subsequent graphs represents the position on an output end surface of a fiber, and the graph represents a light intensity distribution on the output end surface of the fiber.

FIGS. 19(a) to 19(d) each illustrate graphs of light intensity distributions on six cross-sections similar to those of FIG. 18(b). While the ratio of the fundamental mode to the first-order mode is 50:50 in the case of FIG. 18(b), FIG. 19(a), FIG. 19(b), FIG. 19(c), and FIG. 19(d) correspond to ratios of 20:80, 40:60, 60:40, and 80:20, respectively. It can be recognized that the same tendency is observed even when the ratio between the modes is changed.

The present technology uses this phenomenon to determine whether or not the light diameter of collimated light is within a defined range in the double mode.

"Method of determination as to diameter of collimated light"

A method for determining whether or not the light diameter of collimated light is within a defined range in the double mode will now be described.

First, an approach to be adopted in the case where it is determined whether or not the light diameter of collimated light in the double mode is within a defined range will be described. The fundamental mode and the first-order mode are different in positions of propagation in the optical fiber, and the fundamental mode propagates such that the intensity is high in the vicinity of the center of the core, while the first-order mode propagates such that the intensity is high in regions closer to the cladding. Accordingly, in the case where it is determined whether or not the light diameter of collimated light is within a defined range in the double mode, definition needs to be made in such a manner that a line corresponding to a predetermined light intensity, e.g., $1/e^2$, lower than maximum brightness in a light intensity distribution falls within a certain range.

FIG. 20 is a graph in which light intensity distributions that exhibit high intensities on the positive side along the horizontal axis in various mode ratios are superimposed. In the illustrated example, light intensity distributions in the cases where the ratio of the fundamental mode to the first-order mode is 0:100, 20:80, 40:60, 60:40, 80:20, and 100:0 are depicted. It can be recognized from this figure that, on the positive side, the position of, for example, $1/e^2$ is more distant from the center (0) as the percentage of the first-order mode increases.

Thus, in order to determine whether or not the light diameter of collimated light is within a defined range in the double mode, which involves the fundamental mode and the first-order mode, a determination needs to be made depending on, for example, whether the position of a $1/e^2$ line, which is information concerning continuous positions on an X-Y plane at which the light intensity is $1/e^2$ times a maximum intensity, is included in a region that is wider than in the case of a state in which only the fundamental mode is involved but narrower than in the case of a state in which only the first-order mode is involved.

FIG. 21(a) illustrates the region, indicated by hatching, that is wider than in the case of the state in which only the fundamental mode is involved but narrower than in the case of the state in which only the first-order mode is involved. This region corresponds to the defined range, and is an annular region between a first circle and a second circle larger than the first circle.

As illustrated in FIG. 21(c), the first circle is, for example, determined in reference to a $1/e^2$ line in the light intensity distribution of collimated light that includes only a component of the fundamental mode. A region depicted in gray in the vicinity of a center is a region where the light intensity is equal to or greater than $1/e^2$, and an outline thereof is the $1/e^2$ line. The first circle is, for example, a circle that circumscribes the region where the light intensity is equal to or greater than $1/e^2$, or a circle that is slightly smaller.

Meanwhile, as illustrated in FIG. 21(b), the second circle is, for example, determined in reference to a $1/e^2$ line(s) in the light intensity distribution of collimated light that includes only a component of the first-order mode. Regions depicted in gray in the vicinity of a center are regions where the light intensity is equal to or greater than $1/e^2$, and outlines thereof are the $1/e^2$ lines. The second circle is, for example, a circle that circumscribes the regions where the light intensity is equal to or greater than $1/e^2$, or a circle that is slightly larger.

Here, in the case where the light diameter of collimated light that includes only a component of the fundamental mode is assumed to be 140 μm, for example, the diameter of the first circle is determined to be 140 μm or slightly smaller than 140 μm. In addition, at this time, the diameter of the second circle is determined to be $(d2/d1)\cdot140$ μm or slightly greater than $(d2/d1)\cdot140$ μm according to the ratio between the distance d1 of the $1/e^2$ line of the light intensity distribution of the collimated light that includes only a component of the fundamental mode from the center and the distance d2 of the $1/e^2$ line of the light intensity distribution of the collimated light that includes only a component of the first-order mode from the center as illustrated in FIG. 20.

In the case of the double mode, checking whether or not the $1/e^2$ line in the light intensity distribution of the collimated light is included in the annular region (i.e., the defined range) as the one illustrated in FIG. 21(a) makes it possible to determine whether or not the light diameter of the collimated light is within the defined range regardless of the ratio of the fundamental mode to the first-order mode.

Similarly to FIG. 18(a) described above, FIG. 22(a) is a diagram of simulation of a light intensity distribution in the case where light that has components of the fundamental mode and the first-order mode (the ratio of the fundamental mode to the first-order mode is 50:50) is transferred in an optical fiber.

FIGS. 22(b) to 22(g) illustrate light intensity distributions on six cross-sections labelled q1 to q6 in transition of the light intensity distribution in the optical fiber in FIG. 18(a), in which regions are colored differently with use of a light intensity value of $1/e^2$ as a threshold value. Regions depicted in gray in the vicinity of centers are regions where the light intensity is equal to or greater than $1/e^2$, and contours thereof are $1/e^2$ lines. In addition, in each of FIGS. 22(b) to 22(g), the first circle and the second circle as illustrated in FIG. 21(a) described above are also depicted.

It can clearly be recognized from FIGS. 22(b) to 22(g) that the $1/e^2$ line(s) in the light intensity distribution of collimated light is included in the annular region **(i.e., the defined range)** between the first circle and the second circle regardless of whether high intensities are observed on the upper side (i.e., the X side) or the lower side (i.e., the Y side) in the transition of the light intensity in FIG. 22(a). Thus, checking whether the 1/e^2 line(s) in the light intensity distribution of the collimated light is included in the annular region (i.e., the defined range) makes it possible to determine whether or not the light diameter of the collimated light is within the defined range regardless of the state of the intensity distribution on the output end surface of the optical fiber.

In the present technology, the ratio of inclusion of a light intensity line, e.g., a 1/e^2 line, corresponding to a predetermined light intensity lower than a maximum intensity of light intensity in the abovementioned annular region (i.e., the defined range) in an entire circular region centered on an optical axis of collimated light is calculated, and it is determined whether or not the light diameter of the collimated light in the double mode is within the defined range, in reference to this ratio. In this case, it is determined that the light diameter thereof is within the defined range if the ratio is equal to or higher than 30%, for example. Note that the value of 30% is an example, and is not essential to the present technology.

Here, various methods are possible as a method for calculating this ratio, and one possible method is, for example, to define multiple radial lines extending radially from an optical axis center of the collimated light and arranged at regular intervals in the circumferential direction, and calculate the ratio of, for example, those of the multiple radial lines which have a point of intersection with the 1/e^2 line in the annular region to all of the multiple radial lines as the ratio of inclusion of the light intensity line in the annular region. In this case, the ratio of inclusion of, for example, the 1/e^2 line in the annular region can easily and properly be calculated. Note that, in this case, the precision in calculating the ratio can be increased as the number of radial lines increases.

FIG. 23 illustrates an example in which 24 radial lines are arranged to extend radially from an optical axis center of collimated light in the case where the ratio of the fundamental mode to the first-order mode is 50:50. In this case, those of the radial lines which have a point of intersection with a 1/e^2 line in the annular region are nine in number, and the intersection points thereof are represented by black dots. Accordingly, the ratio in this case is calculated as 9 / 24 = 37.5%, and it is determined that the light diameter of the collimated light is within the defined range.

If the annular region (i.e., the defined range) does not have 30% or more of intersection points therein and intersection points are concentrated in a region inside of the annular region, it can be determined that the collimated light has a light diameter smaller than the defined range, and conversely, if intersection points are concentrated in a region outside of the annular region, it can be determined that the collimated light has a light diameter greater than the defined range.

FIG. 24 illustrates light intensity distributions on the cross-sections of FIG. 22 in the case of various mode ratios, in which regions are colored differently with use of a light intensity value of 1/e^2 as a threshold value. Regions depicted in gray in the vicinity of centers are regions where the light intensity is equal to or greater than 1/e^2, and contours thereof are 1/e^2 lines. Although the radial lines are not depicted in the figure, it is recognized that, on all conditions, the ratio of radial lines that have a point of intersection with a 1/e^2 line in the annular region to all radial lines exceeds 30%.

"Example structure of optical communication system"

FIG. 25 illustrates an example structure of an optical communication system 100, which is able to guarantee communication quality through application of the present technology. First, this optical communication system 100 will be described.

This optical communication system 100 has a transmitter 200, a receiver 300, and a cable 400. The transmitter 200 is, for example, an AV source, such as a personal computer (PC), a game machine, a disk player, a set-top box, a digital camera, or a mobile phone. The receiver 300 is, for example, a television receiver, a projector, a PC monitor, or the like. The transmitter 200 and the receiver 300 are connected to each other via the cable 400.

The transmitter 200 has a light emitting section 201, a connector 202 as a receptacle, and an optical fiber 203 that propagates light emitted by the light emitting section 201 to the connector 202. The light emitting section 201 includes a laser element, such as a VCSEL, or a light emitting element (i.e., a light source), such as an LED (light emitting diode). The light emitting section 201 converts an electrical signal (i.e., a transmission signal) generated by a transmission circuit, which is not illustrated, to an optical signal. Light (i.e., an optical signal) emitted by the light emitting section 201 is propagated to the connector 202 through the optical fiber 203.

Meanwhile, the receiver 300 has a connector 301 as a receptacle, a light receiving section 302, and an optical fiber 303 that propagates light obtained by the connector 301 to the light receiving section 302. The light receiving section 302 includes a light receiving element, such as a photodiode. The light receiving section 302 converts an optical signal transmitted from the connector 301 to an electrical signal **(i.e., a** reception signal), and supplies the electrical signal to a reception circuit, which is not illustrated.

The cable 400 has an optical fiber 401 and connectors 402 and 403 that serve as plugs at one end and another end of the optical fiber **401.** The connector 402 at the one end of the optical fiber 401 is connected to the connector 202 of the transmitter 200, while the connector 403 at the other end of the optical fiber 401 is connected to the connector 301 of the receiver 300.

In the optical communication system 100, each of the optical fiber 203 of the transmitter 200, the optical fiber 303 of the receiver 300, and the optical fiber 401 of the cable 400 is designed to propagate only the fundamental mode at a first wavelength. In addition, these optical fibers are configured to cause no wavelength dispersion at the first wavelength. Here, the first wavelength is 1310 nm, and the core diameter d and the numerical aperture NA are d = 8 $\mu$m and NA = **0.1,** respectively, which are typical parameters for a 1310 nm optical fiber, resulting in the normalized frequency V being equal to **1.92.** Thus, these optical fibers function as single-mode fibers at a wavelength of 1310 nm (see FIG. 3).

In addition, the optical communication system 100 performs communication using light that has a second wavelength. Here, the second wavelength is a wavelength that allows each of the abovementioned optical fibers to propagate at least the first-order mode along with the fundamental mode. The wavelength of light emitted by the light emitting section 201 is the second wavelength. Here, the second wavelength is assumed to be 850 nm. In the case where light of 850 nm is used, the normalized frequency V is 2.96 in these optical fibers, enabling the optical fibers to propagate not only the fundamental mode but also the first-order mode and to function as double-mode fibers (see FIG. 6).

Light of 850 nm emitted by the light emitting section 201 enters the optical fiber 203, which is a 1310 nm single-mode fiber, and is propagated to the connector 202. In this case, if the light entering the optical fiber 203 experiences optical axis misalignment, the first-order mode caused by the optical axis misalignment is propagated along with the fundamental mode, which leads to a reduction in coupling loss of optical power (see FIG. 8). This makes it possible to reduce the accuracy against optical axis misalignment to achieve a cost reduction.

Further, the light of 850 nm emitted from the connector 202 at a point of connection between the connector 202 of the transmitter 200 and the connector 402 of the cable 400 enters the optical fiber 401, which is a 1310 nm single-mode fiber, and is propagated toward the receiver 300. In this case, if the light entering the optical fiber 401 experiences optical axis misalignment, the first-order mode caused by the optical axis misalignment is propagated along with the fundamental mode, which leads to a reduction in coupling loss of optical power (see FIG. 8). This makes it possible to reduce the accuracy against optical axis misalignment to achieve a cost reduction.

Further, the light of an 850 nm band emitted from the connector 403 at a point of connection between the connector 403 of the cable 400 and the connector 301 of the receiver 300 enters the optical fiber 303, which is a 1310 nm single-mode fiber, and is propagated to the light receiving section 302. In this case, if the light entering the optical fiber 303 experiences optical axis misalignment, the first-order mode, caused by the optical axis misalignment, is propagated along with the fundamental mode, which leads to a reduction in coupling loss of optical power (see FIG. 8). This makes it possible to reduce the accuracy against optical axis misalignment to achieve a cost reduction.

The present technology can be applied to the optical communication system 100 to determine whether or not, for example, the light diameter of collimated light that is emitted from the connector (i.e., the receptacle) 202 of the transmitter 200 and is coupled to the connector (i.e., the plug) 402 of the cable 400, or of collimated light that is emitted from the connector (i.e., the plug) 403 of the cable 400 and is coupled to the connector (i.e., the receptacle) 301 of the receiver 300, is within a defined range.

FIG. 26 is a perspective view illustrating example structures of the connector 202 of the transmitter 200 and the connector 402 of the cable 400 in FIG. 25. FIG. 27 is also a perspective view illustrating the example structures of the connector 202 of the transmitter 200 and the connector 402 of the cable 400, but this is a view as seen from an opposite direction when compared with FIG. 26. The illustrated example supports parallel transmission of optical signals over multiple channels. Note that, while the connectors that support parallel transmission of optical signals over multiple channels are illustrated here, connectors that support transmission of optical signals over one channel can also be structured in a similar manner, although a detailed description thereof is omitted. In the case of multiple channels, the connectors are provided with multiple sets of a transmission section and a reception section.

The connector 202 includes a connector body (i.e., a ferrule) 211 having an exterior substantially in the shape of a rectangular parallelepiped. Multiple optical fibers 203, each corresponding to a separate one of the channels, are connected to a rear side of the connector body 211, with the optical fibers 203 being arranged side by side in a horizontal direction. An end portion of each of the optical fibers 203 is inserted into an optical fiber insert hole 216 and is fixed therein.

In addition, an adhesive injection hole 212 having a rectangular opening is formed in an upper surface of the connector body 211. An adhesive for fixing the optical fibers 203 to the connector body 211 is injected through the adhesive injection hole 212.

Further, a recessed light exit portion (i.e., a light transmission space) 213 having a rectangular opening is formed in a front surface of the connector body 211, and at a bottom portion of the light exit portion 213, multiple lenses (i.e., collimating lenses) 214, each corresponding to a separate one of the channels, are so formed as to be arranged side by side in the horizontal direction. This prevents a surface of any lens 214 from inadvertently coming into contact with the opposing connector or the like and being damaged.

Further, projecting or recessed position restricting portions 215, which are recessed in the illustrated example, to be used for alignment with the connector 402 are integrally formed in the front surface of the connector body 211. This makes it possible to easily accomplish an optical axis alignment at the time of connection with the connector 402.

The connector 402 includes a connector body (i.e., a ferrule) 411 having an exterior substantially in the shape of a rectangular parallelepiped. Multiple optical fibers 401, each corresponding to a separate one of the channels, are connected to a rear side of the connector body 411, with the optical fibers 401 being arranged side by side in the horizontal direction. An end portion of each of the optical fibers 401 is inserted into an optical fiber insert hole 416 and is fixed therein.

In addition, an adhesive injection hole 412 having a rectangular opening is formed in an upper surface of the connector body 411. An adhesive for fixing the optical fibers 401 to the connector body 411 is injected through the adhesive injection hole 412.

Further, a recessed light entrance portion (i.e., a light transmission space) 413 having a rectangular opening is formed in a front surface of the connector body 411, and at a bottom portion of the light entrance portion 413, multiple lenses (i.e., condensing lenses) 414, each corresponding to a separate one of the channels, are so formed as to be arranged side by side in the horizontal direction. This prevents a surface of any lens 414 from inadvertently coming into contact with the opposing connector or the like and being damaged.

Further, recessed or projecting position restricting portions 415, which are projecting in the illustrated example, to be used for alignment with the connector 202 are integrally formed in the front surface of the connector body **411.** This makes it possible to easily accomplish an optical axis alignment at the time of connection with the connector 202. Note that the position restricting portions 415 and the restricting portions 215 are not limited to portions that are formed integrally with the connector body 411 and the connector body 211, respectively, and that pins may be used, or another technique may be adopted.

FIG. 28(a) is a sectional view illustrating an example of the connector 202 of the transmitter 200. In the illustrated example, the position restricting portions 215 (see FIG. 26) are not illustrated. The connector 202 will further be described below with reference to FIG. 28(a).

The connector 202 includes the connector body **211.** The connector body 211 is formed by a ferrule equipped with lenses, and includes, for example, a light-transmitting material, such as synthetic resin or glass, or a material, such as silicon, which allows a specific wavelength to pass therethrough.

Since the connector body 211 is formed by a ferrule equipped with lenses as described above, optical axis alignment between the optical fibers and the lenses can easily be accomplished. In addition, since the connector body 211 is formed by a ferrule equipped with lenses as described above, multi-channel communication can easily be implemented by simply inserting the optical fibers into the ferrule even in the case of multiple channels.

The connector body 211 has the recessed light exit portion (i.e., the light transmission space) 213 formed in the front surface thereof. In addition, the multiple lenses (i.e., convex lenses) 214, each corresponding to a separate one of the channels, are formed integrally with the connector body 211 in such a manner as to be arranged side by side in the horizontal direction and to be positioned at the bottom portion of the light exit portion 213.

In addition, the connector body 211 has multiple optical fiber insert holes 216 each extending forward from the rear side thereof and being arranged side by side in the horizontal direction in such a manner as to be in alignment with the lenses 214 of the respective channels. Each of the optical fibers 203 has a two-layer structure including a core 203a in a center, which forms a light path, and a cladding 203b, which covers a peripheral surface thereof.

The optical fiber insert hole 216 of each channel is formed such that the optical axes of the core 203a of the optical fiber 203 inserted thereinto and the corresponding lens 214 will be in alignment with each other. In addition, the optical fiber insert hole 216 of each channel is formed such that a bottom position thereof, that is, a position at which an end (i.e., an entrance end) of the optical fiber 203 comes into contact when the optical fiber 203 is inserted thereinto, will coincide with a focal position of the lens 214.

In addition, in the connector body 211, the adhesive injection hole 212, which extends downward from the upper surface thereof, is so formed as to be joined to the multiple optical fiber insert holes 216 arranged side by side in the horizontal direction in the vicinity of the bottom positions thereof. After the optical fibers 203 are inserted into the optical fiber insert holes 216, an adhesive 217 is injected into a region around each optical fiber 203 through the adhesive injection hole 212, so that the optical fiber 203 is fixed to the connector body 211.

In the connector 202, each lens 214 has a function of forming light emitted from the corresponding optical fiber 203 into collimated light and emitting the collimated light. Thus, light emitted from the exit end of the optical fiber 203 with a predetermined NA enters the lens 214 and is formed into collimated light, and the collimated light is emitted from the lens 214.

FIG. 28(b) is a sectional view illustrating an example of the connector 402 of the cable 400. In the illustrated example, the position restricting portions 415 (see FIGS. 26 and 27) are not illustrated. The connector 402 will further be described below with reference to FIG. 28(b).

The connector 402 includes the connector body 411. The connector body 411 is formed by a ferrule equipped with lenses, and includes, for example, a light-transmitting material, such as synthetic resin or glass, or a material, such as silicon, which allows a specific wavelength to pass therethrough.

The connector body 411 has the recessed light entrance portion (i.e., the light transmission space) 413 formed in the front surface thereof. In addition, the multiple lenses (i.e., convex lenses) 414, each corresponding to a separate one of the channels, are formed integrally with the connector body 411 in such a manner as to be arranged side by side in the horizontal direction and to be positioned at the bottom portion of the light entrance portion 413.

In addition, the connector body 411 has multiple optical fiber insert holes 416 each extending forward from the rear side thereof and being arranged side by side in the horizontal direction in such a manner as to be in alignment with the lenses 414 of the respective channels. Each of the optical fibers 401 has a two-layer structure including a core 401a in a center, which forms a light path, and a cladding 401b, which covers a peripheral surface thereof.

The optical fiber insert hole 416 of each channel is formed such that the optical axes of the core 401a of the optical fiber 401 inserted thereinto and the corresponding lens 414 will be in alignment with each other. In addition, the optical fiber insert hole 416 of each channel is formed such that a bottom position thereof, that is, a position at which an end (i.e., an entrance end) of the optical fiber 401 comes into contact when the optical fiber 401 is inserted thereinto, will coincide with a focal position of the lens 414.

In addition, in the connector body 411, the adhesive injection hole 412, which extends downward from the upper surface thereof, is so formed as to be joined to the multiple optical fiber insert holes 416 arranged side by side in the horizontal direction in the vicinity of the bottom positions thereof. After the optical fibers 401 are inserted into the optical fiber insert holes 416, an adhesive 417 is injected into a region around each optical fiber 401 through the adhesive injection hole 412, so that the optical fiber 401 is fixed to the connector body 411.

In the connector 402 of the cable 400, each lens 414 has a function of collecting and condensing incident collimated light. In this case, the collimated light enters the lens 414, and is collected and condensed by the lens 414, and the collected and condensed light enters the entrance end of the optical fiber 401 with a predetermined NA.

FIG. 29 represents a sectional view of the connector 202 of the transmitter 200 and the connector 402 of the cable 400 connected to each other. In the connector 202, light transmitted through the optical fiber 203 is emitted from the exit end of the optical fiber 203 with the predetermined NA. The emitted light enters the lens 214, and is formed into collimated light, and the collimated light is emitted toward the connector 402.

In addition, in the connector 402, the light emitted from the connector 202 enters the lens 414, and is collected and condensed by the lens 414. Further, the collected and condensed light enters the entrance end of the optical fiber 401, and is transmitted through the optical fiber 401.

Note that, although a detailed description is omitted, the connector 403 of the cable 400 and the connector 301 of the receiver 300 in the optical communication system 100 in FIG. 25 have structures similar to the above-described example structures of the connector 202 of the transmitter 200 and the connector 402 of the cable 400 in the optical communication system 100 in FIG. 25.

"Example structure of determination system"

FIG. 30 illustrates an example structure of a determination system 50A that makes a determination as to the light diameter of collimated light that is emitted from the connector 202 of the transmitter 200. This determination system 50A has the transmitter 200, a cable 510, and a determiner 520. The transmitter 200 and the determiner 520 are connected to each other via the cable 510.

The cable 510 has a connector 501 as a plug on a side closer to the transmitter 200. The connector 501 is connected to the connector (i.e., the receptacle) 202 of the transmitter 200, monitors the light intensity distribution of the collimated light emitted from the connector 202, and sends monitoring information to the determiner 520 through the cable 510. In this case, the connector 501 forms a light intensity distribution acquisition section for acquiring a light intensity distribution of collimated light.

FIG. 31 illustrates a state in which the connector 202 of the transmitter 200 and the connector 501 of the cable 510 connected to the determiner 520 are connected to each other. With respect to the connector 202, the description provided above with reference to FIG. 28(a) is applicable, and a description thereof is omitted here.

The connector 501 will be described below. Position restricting portions (see the position restricting portions 215 and 415 in FIG. 26) formed in both the connector 501 and the connector 202 are used for alignment when the connector 501 and the connector 202 are connected to each other, as is the case with the above-described alignment at the time when the connector 202 and the connector 402 are connected to each other.

The connector 501 includes a connector body 511, in which a light intensity distribution monitoring element 512 is disposed, and the position thereof is capable of being adjusted through a position-shiftable jig 513. The light intensity monitoring element 512 is an element for monitoring the light intensity distribution of collimated light that is emitted from the connector 202, and can be formed by, for example, a CCD (Charge-Coupled Device) image sensor, a CMOS (Complementary Metal Oxide Semiconductor) image sensor, or even an infrared image sensor specialized for a long wavelength or the like.

The light intensity distribution monitoring element 512 is disposed such that a monitoring surface (i.e., an imaging surface) thereof is perpendicular to the optical axis of the collimated light emitted from the connector 202. The collimated light emitted from the connector 202 enters the monitoring surface, and information, **e.g., an** imaging signal, regarding the light intensity distribution of the collimated light is outputted.

In the case where the connector 202 supports parallel transmission of optical signals over multiple channels as described above, the connector 501 is also arranged to support the parallel transmission. In this case, for example, multiple light intensity distribution monitoring elements 512 are arranged to be side by side such that each light intensity distribution monitoring element 512 corresponds to a separate one of the channels. Note that, in this case, only one light intensity distribution monitoring element 512 may be provided. In this case, this single light intensity distribution monitoring element 512 may be one that corresponds to the whole of the multiple channels, or one that corresponds to some, e.g., one, of the multiple channels. In the case of the one that corresponds to some of the multiple channels, the light intensity distribution monitoring element 512 is moved sequentially to determine whether or not the light diameter of collimated light of each of the channels is within a defined range.

The position-shiftable jig 513 is arranged to be capable of adjusting the positions of the light intensity distribution monitoring element 512 along an X-axis and a Y-axis of an X-Y plane perpendicular to the optical axis of the collimated light, and also to be capable of adjusting the position of the light intensity distribution monitoring element 512 along a Z-axis direction, which is along the optical axis of the collimated light. Here, when the light emitted from the connector 202 of the transmitter 200 is completely collimated light, the position adjustment along the X-Y plane will suffice. However, this collimated light may involve the direction of dispersion or reduction depending on lens variation. Accordingly, the position adjustment along the Z-axis direction is made possible to make determinations as to the light diameter at multiple distances along a Z-axis, and determine whether or not the light diameter of the collimated light is within the defined range at every position along the Z-axis, thereby making it possible to guarantee more stable communication quality.

Note that, to determine the optical axis center of the collimated light as illustrated in FIG. 23 described above, information regarding an absolute position of the collimated light emitted from the connector 202 of the transmitter 200 is required. In this case, as illustrated in FIG. 32, it is sufficient if, with one of the position restricting portions 215 being defined as a zero point, a center position D1 of each lens 214 determined relative to the zero point, hence a center position of the collimated light, is defined as the optical axis center.

In this case, it is not necessary to cause a center position D2 of the light intensity distribution monitoring element 512 to coincide with the center position D1 of the lens 214. This is because, when the center position D2 of the light intensity distribution monitoring element 512 and the center position D1 of the lens 214 with the position restricting portion 215 as the zero point are known, it is possible to obtain the center position of the lens 214 on the monitoring surface of the light intensity distribution monitoring element 512, hence the center position of the collimated light, through calculation.

Described with reference to FIG. 30 again, the determiner 520 has a signal processing section 521 and a display section 522. The signal processing section 521 determines whether or not the light diameter of the collimated light emitted from the connector 202 of the transmitter 200 is within the defined range, in reference to information, e.g., an imaging signal, regarding the light intensity distribution of the collimated light transmitted from the connector 501 through the cable 510.

FIG. 33 illustrates examples of functional blocks of the signal processing section 521. The signal processing section 521 has a $1/e^2$ line acquisition section 521a, a circumferential-direction ratio calculation section 521b, and a light diameter determination section 521c.

In reference to the information, e.g., the imaging signal, regarding the light intensity distribution transmitted from the connector 501 through the cable 510, the $1/e^2$ line acquisition section 521a acquires information concerning continuous positions on the X-Y plane at which the light intensity is $1/e^2$ times the maximum intensity, i.e., the $1/e^2$ line, with use of a predetermined light intensity, e.g., a light intensity of $1/e^2$, lower than the maximum intensity of light intensity as a threshold value.

Here, it is possible to acquire the $1/e^2$ line with use of the information regarding the light intensity distribution transmitted from the connector 501 through the cable 510 as it is, but it is also possible to acquire the $1/e^2$ line, for example, after normalizing the information regarding the light intensity distribution transmitted from the connector 501 through the cable 510 such that the maximum value will be 1. This normalization makes it possible to acquire the $1/e^2$ line with use of the same threshold value at all times.

In reference to the $1/e^2$ line acquired by the $1/e^2$ line acquisition section 521a, the circumferential-direction ratio calculation section 521b calculates the ratio of inclusion of the $1/e^2$ line in the annular region (see FIG. 21(a)) between the first circle and the second circle larger than the first circle with the optical axis of the collimated light in the center in the entire circular region centered on the optical axis of the collimated light. As described above, the first circle is determined in reference to the $1/e^2$ line in the light intensity distribution of collimated light that includes only a component of the fundamental mode (see FIG. 21(c)), while the second circle is determined in reference to the $1/e^2$ line in the light intensity distribution of collimated light that includes only a component of the first-order mode (see FIG.

21(b)).

Further, as described above, in the case where the light diameter of the collimated light that includes only a component of the fundamental mode is assumed to be 140 $\mu$m, for example, the diameter of the first circle is determined to be 140 $\mu$m or slightly smaller than 140 $\mu$m. In addition, at this time, the diameter of the second circle is determined to be $(d2/d1)\cdot140$ $\mu$m or slightly greater than $(d2/d1)\cdot140$ $\mu$m according to the ratio between the distance d1 of the 1/e^2 line of the light intensity distribution of the collimated light that includes only a component of the fundamental mode from the center and the distance d2 of the 1/e^2 line of the light intensity distribution of the collimated light that includes only a component of the first-order mode from the center as illustrated in FIG. 20.

Here, the circumferential-direction ratio calculation section 521b, for example, defines multiple radial lines extending radially from the optical axis center of the collimated light and arranged at regular intervals in the circumferential direction, and calculates the ratio of those of the multiple radial lines which have a point of intersection with the 1/e^2 line in the annular region to all of the multiple radial lines as the ratio of inclusion of the light intensity line in the annular region (see FIG. 23). Such a way of calculating the ratio makes it possible to easily and properly calculate the ratio of inclusion of the 1/e^2 line in the annular region.

The light diameter determination section 521c determines whether or not the light diameter of the collimated light is within the defined range in reference to the ratio calculated by the circumferential-direction ratio calculation section 521b. In this case, the light diameter of the collimated light is determined to be within the defined range when the ratio is equal to or greater than a threshold value, e.g., 30%, and is otherwise determined to be outside of the defined range.

Described with reference to FIG. 30 again, in reference to a result of the determination outputted from the signal processing section 521, the display section 522, which includes an LCD panel, an organic EL panel, or the like, displays the determination result. Note that, although it has been assumed here, by way of example, that the determination result is reported to a user by being displayed, it is also possible that the determination result is reported thereto with use of audio, a buzzer sound, or the like along with or instead of the display.

A flowchart of FIG. 34 illustrates examples of processing procedures performed at the transmitter 200 and the determiner 520 when a determination is made by the determiner 520.

The transmitter 200 starts output of the collimated light in step ST1. Meanwhile, the determiner 520 starts a determination process in step ST11.

Next, in step ST12, the determiner 520 monitors the light intensity distribution of the collimated light through the light intensity distribution monitoring element 512 of the connector 501, thereby obtaining the information regarding the light intensity distribution thereof. For example, the collimated light is imaged, and an imaging signal is obtained as the information regarding the light intensity distribution of the collimated light.

Next, in step ST13, in reference to the information, e.g., the imaging signal, regarding the light intensity distribution of the collimated light obtained in step ST12, the determiner 520 acquires, at the signal processing section 521 (i.e., the 1/e^2 line acquisition section 521a), the information concerning continuous positions on the X-Y plane at which the light intensity is 1/e^2 times the maximum intensity, i.e., the 1/e^2 line, with use of a value of light intensity equal to 1/e^2 times the maximum intensity thereof as a threshold value.

Next, in step ST14, in reference to the 1/e^2 line acquired in step ST13, the determiner 520 calculates, at the signal processing section 521 (i.e., the circumferential-direction ratio calculation section 521b), the ratio of inclusion of the 1/e^2 line in the annular region between the first circle and the second circle larger than the first circle with the optical axis of the collimated light in the center in the entire circular region centered on the optical axis of the collimated light.

Next, in step ST15, the determiner 520 determines, at the signal processing section 521 (i.e., the light diameter determination section 521c), whether or not the light diameter of the collimated light is within the defined range, in reference to the ratio calculated in step ST14. Then, in step ST16, in reference to a result of the determination in step ST15, the determiner 520 displays the determination result at the display section 522, thereby reporting the determination result to the user.

Next, the determiner 520 ends the determination process in step ST17, and the transmitter 200 stops the output of the collimated light in step ST2.

Note that the determination process may be started by the determiner 520 in step ST12 in reference to information concerning the start of the output of the collimated light sent from the transmitter 200 to the determiner 520, that the output of the collimated light may be stopped by the transmitter 200 in step ST2 in reference to information concerning the ending of the determination sent from the determiner 520 to the transmitter 200, and that each of the start of the determination process and the stop of the output of the collimated light may be initiated according to a manual operation by the user.

As described above, in the determination system 50A illustrated in FIG. 30, in reference to the information, e.g., the imaging signal, regarding the light intensity distribution of the collimated light, which includes components of the fundamental mode and the first-order mode and which is emitted from the connector 202 of the transmitter 200, the information concerning continuous positions on the X-Y plane at which the light intensity is 1/e^2 times the maximum intensity, i.e., the 1/e^2 line, for example, is acquired using the predetermined light intensity, e.g., a light intensity of 1/e^2, lower than the maximum intensity of light intensity as a threshold value; the ratio of inclusion of the $1/e^2$ line in the annular region between the first circle and the second circle larger than the first circle with the optical axis of the collimated light in the center in the entire circular region centered on the optical axis of the collimated light is calculated; and in reference to this ratio, it is determined whether or not the light diameter of the collimated light emitted from the connector 202 of the transmitter 200 is within the defined range. Thus, this determination system 50A is able to satisfactorily determine whether or not the light diameter of collimated light in the double mode that is emitted from the connector 202 of the transmitter 200 is within the defined range, and is able to guarantee communication quality of the optical communication system 100.

FIG. 35 illustrates an example structure of a determination system 50B that makes a determination as to the light diameter of collimated light that is emitted from the connector 403 of the cable. This determination system 50B has the transmitter 200, the cable 400, and a determiner 530.

The determiner 530 has a connector 531, a signal processing section 532, and a display section 533. The connector 531 is connected to the connector 403 of the cable 400, monitors the light intensity distribution of the collimated light emitted from the connector 403, and sends monitoring information to the signal processing section 532. In this case, the connector 531 forms a light intensity distribution acquisition section for acquiring a light intensity distribution of collimated light.

The connector 531 has a structure similar to that of the connector 501 in the determination system 50A of FIG. 30 described above, although a detailed description thereof is omitted. In addition, the state of connection between the connector 403 of the cable 400 and the connector 531 of the determiner 530 is similar to the state of connection between the connector 202 of the transmitter 200 and the connector 501 of the cable 510 described above with reference to FIG. 31, although a detailed description thereof is omitted.

The signal processing section 532 has a structure similar to that of the signal processing section 521 (see FIG. 33) of the determiner 520 in the determination system 50A of FIG. 30 described above although a detailed description thereof is omitted, and determines whether or not the light diameter of the collimated light emitted from the connector 403 of the cable 400 is within the defined range, in reference to information, e.g., an imaging signal, regarding the light intensity distribution of the collimated light transmitted from the connector 531.

The display section 533 has a structure similar to that of the display section 522 of the determiner 520 in the determination system 50A of FIG. 30 described above although a detailed description thereof is omitted, and, in reference to a result of the determination outputted from the signal processing section 532, displays the determination result. Note that, although it has been assumed here, by way of example, that the determination result is reported to a user by being displayed, it is also conceivable that the determination result is reported thereto with use of audio, a buzzer sound, or the like along with or instead of the display.

As described above, in the system 50B illustrated in FIG. 35, in reference to the information, e.g., the imaging signal, regarding the light intensity distribution of the collimated light, which includes components of the fundamental mode and the first-order mode and which is emitted from the connector 403 of the cable 400, the information concerning continuous positions on the X-Y plane at which the light intensity is $1/e^2$ times the maximum intensity, i.e., the $1/e^2$ line, for example, is acquired using the predetermined light intensity, e.g., a light intensity of $1/e^2$, lower than the maximum intensity of light intensity as a threshold value; the ratio of inclusion of the $1/e^2$ line in the annular region between the first circle and the second circle larger than the first circle with the optical axis of the collimated light in the center in the entire circular region centered on the optical axis of the collimated light is calculated; and in reference to this ratio, it is determined whether or not the light diameter of the collimated light emitted from the connector 403 of the cable 400 is within the defined range. Thus, this system 50B is able to satisfactorily determine whether or not the light diameter of collimated light in the double mode that is emitted from the connector 403 of the cable 400 is within the defined range, and is able to guarantee communication quality of the optical communication system 100.

"Processing via software"

The processing in each of the signal processing sections 521 and 532 of the determiners 520 and 530 illustrated in FIGS. 30 and 35 described above can be implemented via hardware, and can also be implemented via software. In the case where the series of processes are implemented via software, a program that constitutes the software is installed from a recording medium into a computer having a dedicated hardware configuration, or, for example, a general-purpose computer that, when various programs are installed thereon, becomes capable of performing various functions, or the like.

FIG. 36 is a block diagram illustrating an example hardware configuration of a computer 600. The computer 600 has a CPU 601, a ROM 602, a RAM 603, a bus 604, an input/output interface 605, an input section 606, an output section 607, a storage section 608, a drive 609, a connection port 610, and a communication section 611. Note that the hardware configuration illustrated here is an example, and that some of constituent elements thereof may be omitted. Also note that a constituent element(s) other than the constituent elements illustrated here may further be included.

The CPU 601, for example, functions as an arithmetic processing device or a control device, and, according to various programs recorded on the ROM 602, the RAM 603, the storage section 608, or a removable recording medium 701, controls a whole or part of an operation of each constituent element.

The ROM 602 is means for storing a program to be read by the CPU 601, data to be used in computation, and so on. In the RAM 603, for example, the program to be read by the CPU 601, various parameters that vary as appropriate when the program is executed, and so on are temporarily or permanently stored.

The CPU 601, the ROM 602, and the RAM 603 are connected to one another via the bus 604. Meanwhile, various constituent elements are connected to the bus 604 via the input/output interface 605.

Examples of the input section 606 include a mouse, a keyboard, a touch panel, a button, a switch, and a lever. Further, a remote controller (hereinafter referred to as a remote control) capable of transmitting a control signal with use of infrared rays or other radio waves may be used as the input section 606.

Examples of the output section 607 include a display device, such as a CRT (Cathode Ray Tube) display, an LCD, or an organic EL display, an audio output device, such as a loudspeaker or headphones, and a device, such as a printer, a mobile phone, or a facsimile, which is capable of reporting acquired information to a user visually or aurally.

The storage section 608 is a device for storing various types of data. Examples of the storage section 608 include a magnetic storage device, such as a hard disk drive (HDD), a semiconductor storage device, an optical storage device, and a magneto-optical storage device.

The drive 609 is, for example, a device that reads information recorded on the removable recording medium 701, such as a magnetic disk, an optical disk, a magneto-optical disk, or a semiconductor memory, or writes information into the removable recording medium 701.

Examples of the removable recording medium 701 include a DVD medium, a Blu-ray (registered trademark) medium, an HD DVD medium, and various types of semiconductor storage media. Needless to say, an IC card equipped with a contactless IC chip, an electronic device, or the like, for example, may be used as the removable recording medium 701.

The connection port 610 is, for example, a port for connection with an external connected device 502, such as a USB (Universal Serial Bus) port, an HDMI (High-Definition Multimedia Interface) port, an IEEE 1394 port, an SCSI (Small Computer System Interface), an RS-232C port, or an optical audio terminal. Examples of the external connected device 702 include a printer, a portable music player, a digital camera, a digital video camera, and an IC recorder.

The communication section 611 is a communication device for connection to a network 703, and examples thereof include a communication card for a wired or wireless LAN, Bluetooth (registered trademark), or a WUSB (Wireless USB), a router for optical communication, a router for ADSL (Asymmetric Digital Subscriber Line), and modems for various types of communication.

Note that the program executed by the computer may be either a program that causes the processes to be performed chronologically in an order as described in the present specification, or a program that causes the processes to be performed in parallel or at times when they need be performed, such as when calls have been issued.

<2. Example Modifications>

Note that, while it has been assumed in the above-described embodiments that the first wavelength is 1310 nm, the first wavelength may be in the range of, for example, 300 nm to 5 μm because a laser light source or an LED light source is supposed to be used as the light source.

In addition, while it has been assumed in the above-described embodiments that the first wavelength is 1310 nm, the first wavelength may be a wavelength in a 1310 nm band, including 1310 nm. Further, while it has been assumed in the above-described embodiments that the first wavelength is 1310 nm, the first wavelength may be 1550 nm or a wavelength in a 1550 nm band, including 1550 nm. Further, while it has been assumed in the foregoing description that the second wavelength is 850 nm, the second wavelength may be a wavelength in an 850 nm band, including 850 nm.

In addition, while it has been assumed, by way of example, in the above-described embodiments that optical fibers are used as optical waveguides, it is needless to say that the present technology is also applicable in cases where optical waveguides other than optical fibers, e.g., silicon optical waveguides or the like, are used.

While preferred embodiments of the present disclosure have been described in detail above with reference to the accompanying drawings, the technical scope of the present disclosure is not limited to such examples. It is clear that a person having common knowledge in a technical field to which the present disclosure pertains can conceive of various alterations or modifications within the scope of the appended claims, and it will be understood that such alterations or modifications also naturally fall within the technical scope of the present disclosure.

In addition, the effects described in the present specification are merely illustrative and demonstrative, and not limitative. In other words, the technology according to the present disclosure can exhibit other effects that are evident to those skilled in the art from the description of the present specification along with or instead of the above-described effects.

[Reference Signs List]

10T, 10R: Optical fiber
10a: Core
10b: Cladding
11T, 11R: Lens
50A, 50B: Determination system
100: Optical communication system
200: Transmitter
201: Light emitting section
202: Connector (receptacle)
203: Optical fiber
203a: Core
203b: Cladding
211: Connector body
212: Adhesive injection hole
213: Light exit portion (light transmission space)
214: Lens (collimating lens)
215: Position restricting portion
216: Optical fiber insert hole
217: Adhesive
300: Receiver
301: Connector (receptacle)
302: Light receiving section
303: Optical fiber
400: Optical cable
401: Optical fiber
402, 403: Connector (plug)
411: Connector body (ferrule)
400: Cable
401: Optical fiber
401a: Core
401b: Cladding
402, 403: Connector (plug)
411: Connector body
412: Adhesive injection hole
413: Light entrance portion (light transmission space)
414: Lens (condensing lens)
415: Position restricting portion
416: Optical fiber insert hole
417: Adhesive
501: Connector
510: Cable
511: Connector body
512: Light intensity distribution monitoring element
513: Position-shiftable jig
520: Determiner
521: Signal processing section
521a: 1/e^2 line acquisition section
521b: Circumferential-direction ratio calculation section
521c: Light diameter determination section
522: Display section
531: Connector
532: Signal processing section
533: Display section
600: Computer

**Claims**

1. A determination apparatus (50A) comprising:

a light intensity distribution acquisition section (501) that acquires a light intensity distribution of collimated light including components of a fundamental mode and a first-order mode;
a light intensity line acquisition section (521a) that acquires a light intensity line corresponding to a predetermined light intensity lower than a maximum intensity of light intensity, in reference to the light intensity distribution;
a ratio calculation section (521b) that calculates a ratio of inclusion of the light intensity line in an annular region between a first circle and a second circle larger than the first circle with an optical axis of the collimated light in a center in an entire circular region centered on the optical axis of the collimated light; and
a determination section (521c) that determines whether or not a light diameter of the collimated light is within a defined range, in reference to the ratio; wherein
the first circle is determined in reference to a light intensity line corresponding to the predetermined light intensity in a light intensity distribution of collimated light including only the component of the fundamental mode, and
the second circle is determined in reference to a light intensity line corresponding to the predetermined light intensity in a light intensity distribution of collimated light including only the component of the first-order mode.

2. The determination apparatus according to claim 1, wherein the predetermined light intensity is a light intensity equal to 1/e^2 times the maximum intensity.

3. The determination apparatus according to claim 1, wherein the light intensity line acquisition section normalizes the light intensity distribution such that the maximum intensity will be a predetermined value, and acquires the predetermined light intensity line through comparison of the normalized light intensity distribution with a threshold value.

4. The determination apparatus according to claim 1, wherein the ratio calculation section defines multiple radial lines extending radially from an optical axis center of the collimated light and arranged at regular intervals in a circumferential direction, and calculates a ratio of those of the multiple radial lines which have a point of intersection with the light intensity line in the annular region to all of the multiple radial lines as the ratio of inclusion of the light intensity line in the annular region.

5. The determination apparatus according to claim 1, wherein the light intensity distribution acquisition section acquires the light intensity distribution in reference to an imaging signal obtained by imaging the collimated light.

6. The determination apparatus according to claim 5, further comprising:
an imaging device for obtaining the imaging signal.

7. The determination apparatus according to claim 6, wherein

the imaging device is disposed in an optical connector, and
the optical connector has a moving mechanism for enabling a position of the imaging device to move in a direction along the optical axis of the collimated light.

8. The determination apparatus according to claim 1, wherein

the collimated light is obtained by collimating light of a second wavelength outputted from an output end surface of an optical waveguide that propagates only the fundamental mode at a first wavelength through a collimating lens, and
the second wavelength is a wavelength that allows the optical waveguide to propagate at least the first-order mode along with the fundamental mode.

9. The determination apparatus according to claim 8, further comprising:

a reception section that receives the collimated light collimated through the collimating lens, wherein
the collimating lens forms a portion of a receptacle of an electronic device.

10. The determination apparatus according to claim 8, further comprising:

a reception section that receives the collimated light collimated through the collimating lens, wherein
the collimating lens forms a portion of a plug of an optical cable.

11. The determination apparatus according to claim 1, further comprising:
a reporting section that reports a result of the determination.

12. A determination method comprising:

a step of acquiring, by a light intensity distribution acquisition section (501) of a determination apparatus (50A), a light intensity distribution of collimated light including components of a fundamental mode and a first-order mode;
a step of acquiring, by a light intensity line acquisition section (521a) of the determination apparatus, a light intensity line corresponding to a predetermined light intensity lower than a maximum intensity of light intensity in reference to the light intensity distribution;
a step of calculating, by a ratio calculation section (521b) of the determination apparatus, a ratio of inclusion of the light intensity line in an annular region between a first circle and a second circle larger than the first circle with an optical axis of the collimated light in a center in an entire circular region centered on the optical axis of the collimated light; and
a step of determining, by a determination section (521c) of the determination apparatus, whether or not a light diameter of the collimated light is within a defined range, in reference to the ratio; wherein
the first circle is determined in reference to a light intensity line corresponding to the predetermined light intensity in a light intensity distribution of collimated light including only the component of the fundamental mode, and
the second circle is determined in reference to a light intensity line corresponding to the predetermined light intensity in a light intensity distribution of collimated light including only the component of the first-order mode.

13. A computer program comprising instructions to cause a determination apparatus according to claim 1 to execute a determination method according to claim 12.

**Patentansprüche**

1. Bestimmungseinrichtung (50A), umfassend:

einen Lichtintensitätsverteilungserfassungsabschnitt (501), der eine Lichtintensitätsverteilung von kollimiertem Licht erfasst, das Komponenten einer Grundmode und einer Mode erster Ordnung einschließt;
einen Lichtintensitätslinienerfassungsabschnitt (521a), der eine Lichtintensitätslinie erfasst, die einer vorbestimmten Lichtintensität entspricht, die niedriger als eine maximale Intensität von Lichtintensität, unter Bezugnahme auf die Lichtintensitätsverteilung, ist;

einen Verhältnisberechnungsabschnitt (521b), der ein Verhältnis einer Einschließung der Lichtintensitätslinie in einer ringförmigen Region zwischen einem ersten Kreis und einem zweiten Kreis, der größer als der erste Kreis ist, mit einer optischen Achse des kollimierten Lichts in einem Zentrum in einer gesamten kreisförmigen Region berechnet, die auf der optischen Achse des kollimierten Lichts zentriert ist; und

einen Bestimmungsabschnitt (521c), der bestimmt, ob ein Lichtdurchmesser des kollimierten Lichts innerhalb eines definierten Bereichs liegt oder nicht, unter Bezugnahme auf das Verhältnis; wobei

der erste Kreis unter Bezugnahme auf eine Lichtintensitätslinie bestimmt wird, die der vorbestimmten Lichtintensität in einer Lichtintensitätsverteilung von kollimiertem Licht entspricht, das nur die Komponente der Grundmode einschließt, und

der zweite Kreis unter Bezugnahme auf eine Lichtintensitätslinie bestimmt wird, die der vorbestimmten Lichtintensität in einer Lichtintensitätsverteilung von kollimiertem Licht entspricht, das nur die Komponente der Mode erster Ordnung einschließt.

2. Bestimmungseinrichtung nach Anspruch 1, wobei die vorbestimmte Lichtintensität eine Lichtintensität gleich I/e^2 mal der maximalen Intensität ist.

3. Bestimmungseinrichtung nach Anspruch 1, wobei der Lichtintensitätslinienerfassungsabschnitt die Lichtintensitätsverteilung derart normalisiert, dass die maximale Intensität ein vorbestimmter Wert ist, und die vorbestimmte Lichtintensitätslinie durch einen Vergleich der normalisierten Lichtintensitätsverteilung mit einem Schwellenwert erfasst.

4. Bestimmungseinrichtung nach Anspruch 1, wobei der Verhältnisberechnungsabschnitt mehrere radiale Linien definiert, die sich von einem optischen Achsenzentrum des kollimierten Lichts radial erstrecken und in regelmäßigen Abständen in einer Umfangsrichtung arrangiert sind, und ein Verhältnis derjenigen der mehreren radialen Linien, die einen Schnittpunkt mit der Lichtintensitätslinie in der ringförmigen Region aufweisen, zu allen der mehreren radialen Linien als das Verhältnis der Einschließung der Lichtintensitätslinie in die ringförmige Region berechnet.

5. Bestimmungseinrichtung nach Anspruch 1, wobei der Lichtintensitätsverteilungserfassungsabschnitt die Lichtintensitätsverteilung unter Bezugnahme auf ein Bildgebungssignal erfasst, das durch ein Bildgeben des kollimierten Lichts erhalten wird.

6. Bestimmungseinrichtung nach Anspruch 5, ferner umfassend:

eine Bildgebungsvorrichtung zum Erhalten des Bildgebungssignals.

7. Bestimmungseinrichtung nach Anspruch 6, wobei

die Bildgebungsvorrichtung in einem optischen Verbinder angeordnet ist, und der optische Verbinder einen Bewegungsmechanismus zum Ermöglichen einer Position der Bildgebungsvorrichtung aufweist, sich in einer Richtung entlang der optischen Achse des kollimierten Lichts zu bewegen.

8. Bestimmungseinrichtung nach Anspruch 1, wobei

das kollimierte Licht durch das Kollimieren von Licht einer zweiten Wellenlänge, die von einer Ausgangsendoberfläche eines optischen Wellenleiters ausgegeben wird, der nur die Grundmode bei einer ersten Wellenlänge propagiert, durch eine Kollimierlinse erhalten wird, und die zweite Wellenlänge eine Wellenlänge ist, die den optischen Wellenleiter befähigt, mindestens die Mode erster Ordnung zusammen mit der Grundmode zu propagieren.

9. Bestimmungseinrichtung nach Anspruch 8, ferner umfassend:

einen Empfangsabschnitt, der das kollimierte Licht empfängt, das durch die Kollimierlinse kollimiert wird, wobei die Kollimierlinse einen Anteil einer Aufnahme einer elektronischen Vorrichtung ausbildet.

10. Bestimmungseinrichtung nach Anspruch 8, ferner umfassend:

einen Empfangsabschnitt, der das kollimierte Licht empfängt, das durch die Kollimierlinse kollimiert wird, wobei die Kollimierlinse einen Anteil eines Steckers eines optischen Kabels ausbildet.

11. Bestimmungseinrichtung nach Anspruch 1, ferner umfassend:

einen Berichtsabschnitt, der ein Ergebnis der Bestimmung berichtet.

12. Bestimmungsverfahren, umfassend:

einen Schritt des Erfassens, durch einen Lichtintensitätsverteilungserfassungsabschnitt (501) einer Bestimmungseinrichtung (50A), einer Lichtintensitätsverteilung von kollimiertem Licht, das Komponenten einer Grundmode und einer Mode erster Ordnung einschließt;

einen Schritt des Erfassens, durch einen Lichtintensitätslinienerfassungsabschnitt (521a) der Bestimmungseinrichtung, einer Lichtintensitätslinie, die einer vorbestimmten Lichtintensität entspricht, die niedriger als eine maximale Intensität von Lichtintensität unter Bezugnahme auf die Lichtintensitätsverteilung ist;

einen Schritt des Berechnens, durch einen Verhältnisberechnungsabschnitt (521b) der Bestimmungseinrichtung, eines Verhältnisses der Einschließung der Lichtintensitätslinie in einer ringförmigen Region zwischen einem ersten Kreis und einem zweiten Kreis, der größer als der erste Kreis ist, mit einer optischen Achse des kollimierten Lichts in einem Zentrum in einer gesamten kreisförmigen Region, die auf der optischen Achse des kollimierten Lichts zentriert ist; und

einen Schritt des Bestimmens, durch einen Bestimmungsabschnitt (521c) der Bestimmungseinrichtung, ob ein Lichtdurchmesser des kollimierten Lichts innerhalb eines definierten Bereichs liegt oder nicht, unter Bezugnahme auf das Verhältnis;

wobei

der erste Kreis unter Bezugnahme auf eine Lichtintensitätslinie bestimmt wird, die der vorbestimmten Lichtintensität in einer Lichtintensitätsverteilung von kollimiertem Licht entspricht, das nur die Komponente der Grundmode einschließt, und

der zweite Kreis unter Bezugnahme auf eine Lichtintensitätslinie bestimmt wird, die der vorbestimmten Lichtintensität in einer Lichtintensitätsverteilung von kollimiertem Licht entspricht, das nur die Komponente der Mode erster Ordnung einschließt.

**13.** Computerprogramm, umfassend Anweisungen, um eine Bestimmungseinrichtung nach Anspruch 1 zu veranlassen, ein Bestimmungsverfahren nach Anspruch 12 auszuführen.

**Revendications**

**1.** Appareil de détermination (50A) comprenant :

une section d'acquisition de distribution d'intensité de lumière (501) qui acquiert une distribution d'intensité de lumière d'une lumière collimatée comportant des composantes d'un mode fondamental et d'un mode de premier ordre ;
une section d'acquisition de ligne d'intensité de lumière (521a) qui acquiert une ligne d'intensité de lumière correspondant à une intensité de lumière prédéterminée inférieure à une intensité maximale d'intensité de lumière, en référence à la distribution d'intensité de lumière ;

une section de calcul de rapport (521b) qui calcule un rapport d'inclusion de la ligne d'intensité de lumière dans une région annulaire entre un premier cercle et un second cercle plus grand que le premier cercle avec un axe optique de la lumière collimatée dans un centre dans une région circulaire entière centrée sur l'axe optique de la lumière collimatée ; et

une section de détermination (521c) qui détermine si un diamètre de lumière de la lumière collimatée est ou non au sein d'une plage définie, en référence au rapport ; dans lequel

le premier cercle est déterminé en référence à une ligne d'intensité de lumière correspondant à l'intensité de lumière prédéterminée dans une distribution d'intensité de lumière d'une lumière collimatée comportant uniquement la composante du mode fondamental, et

le second cercle est déterminé en référence à une ligne d'intensité de lumière correspondant à l'intensité de lumière prédéterminée dans une distribution d'intensité de lumière d'une lumière collimatée comportant uniquement la composante du mode de premier ordre.

**2.** Appareil de détermination selon la revendication 1, dans lequel l'intensité de lumière prédéterminée est une intensité de lumière égale à $1/e^2$ fois l'intensité maximale.

**3.** Appareil de détermination selon la revendication 1, dans lequel la section d'acquisition de ligne d'intensité de lumière normalise la distribution d'intensité de lumière de telle sorte que l'intensité maximale sera une valeur prédéterminée, et acquiert la ligne d'intensité de lumière prédéterminée par le biais d'une comparaison de la distribution d'intensité de lumière normalisée à une valeur seuil.

**4.** Appareil de détermination selon la revendication 1, dans lequel la section de calcul de rapport définit de multiples lignes radiales s'étendant radialement à partir d'un centre d'axe optique de la lumière collimatée et agencées à intervalles réguliers dans une direction circonférentielle, et calcule un rapport de celles des multiples lignes radiales qui ont un point d'intersection avec la ligne d'intensité de lumière dans la région annulaire à la totalité des multiples lignes radiales en guise de rapport d'inclusion de la ligne d'intensité de lumière dans la région annulaire.

**5.** Appareil de détermination selon la revendication 1, dans lequel la section d'acquisition de distribution d'intensité de lumière acquiert la distribution d'intensité de lumière en référence à un signal d'imagerie obtenu par imagerie de la lumière collimatée.

6. Appareil de détermination selon la revendication 5, comprenant en outre :
un dispositif d'imagerie permettant d'obtenir le signal d'imagerie.

7. Appareil de détermination selon la revendication 6, dans lequel

le dispositif d'imagerie est disposé dans un connecteur optique, et
le connecteur optique a un mécanisme de déplacement pour permettre à une position du dispositif d'imagerie de se déplacer dans une direction le long de l'axe optique de la lumière collimatée.

8. Appareil de détermination selon la revendication 1, dans lequel

la lumière collimatée est obtenue par collimation de lumière d'une seconde longueur d'onde délivrée en sortie par une surface d'extrémité de sortie d'un guide d'ondes optique qui propage uniquement le mode fondamental à une première longueur d'onde à travers une lentille de collimation, et
la seconde longueur d'onde est une longueur d'onde qui permet au guide d'ondes optique de propager au moins le mode de premier ordre en même temps que le mode fondamental.

9. Appareil de détermination selon la revendication 8, comprenant en outre :

une section de réception qui reçoit la lumière collimatée qui a été collimatée à travers la lentille de collimation, dans lequel
la lentille de collimation fait partie d'une prise d'un dispositif électronique.

10. Appareil de détermination selon la revendication 8, comprenant en outre :

une section de réception qui reçoit la lumière collimatée qui a été collimatée à travers la lentille de collimation, dans lequel
la lentille de collimation fait partie d'un connecteur d'un câble optique.

11. Appareil de détermination selon la revendication 1, comprenant en outre :
une section de rapport qui rapporte un résultat de la détermination.

12. Procédé de détermination comprenant :

une étape d'acquisition, par une section d'acquisition de distribution d'intensité de lumière (501) d'un appareil de détermination (50A), d'une distribution d'intensité de lumière d'une lumière collimatée comportant des composantes d'un mode fondamental et d'un mode de premier ordre ;
une étape d'acquisition, par une section d'acquisition de ligne d'intensité de lumière (521a) de l'appareil de détermination, d'une ligne d'intensité de lumière correspondant à une intensité de lumière prédéterminée inférieure à une intensité maximale d'intensité de lumière en référence à la distribution d'intensité de lumière ;
une étape de calcul, par une section de calcul de rapport (521b) de l'appareil de détermination, d'un rapport d'inclusion de la ligne d'intensité de lumière dans une région annulaire entre un premier cercle et un second cercle plus grand que le premier cercle avec un axe optique de la lumière collimatée dans un centre dans une région circulaire entière centrée sur l'axe optique de la lumière collimatée ; et
une étape consistant à déterminer, par une section de détermination (521c) de l'appareil de détermination, si un diamètre de lumière de la lumière collimatée est ou non au sein d'une plage définie, en référence au rapport ;
dans lequel
le premier cercle est déterminé en référence à une ligne d'intensité de lumière correspondant à l'intensité de lumière prédéterminée dans une distribution d'intensité de lumière d'une lumière collimatée comportant uniquement la composante du mode fondamental, et
le second cercle est déterminé en référence à une ligne d'intensité de lumière correspondant à l'intensité de lumière prédéterminée dans une distribution d'intensité de lumière d'une lumière collimatée comportant uniquement la composante du mode de premier ordre.

13. Programme informatique comprenant des instructions pour amener un appareil de détermination selon la revendication 1 à exécuter un procédé de détermination selon la revendication 12.

**F I G . 1**

F I G . 2

(a)

(b)

# FIG.3

（a）

WAVELENGTH OF PROPAGATING LIGHT : 1310nm

CORE DIAMETER : 8um

NA : 0.1

CLADDING

CORE →

FUNDAMENTAL MODE

（b）

$$b= ((\beta/k)^2 - n_2^2)/(n_1^2 - n_2^2)$$

$V = 1.92$

$V = \pi d \mathrm{NA}/\lambda$

EP 4 471 399 B1

# F I G . 4

## (a)

CLADDING

CORE

15T    15R

16T    16R

10T    10R

11T    11R

OPTICAL AXIS OF INCIDENT LIGHT

## (b)

CLADDING

CORE

15T    15R

16T    16R

10T    10R

11T    11R

OPTICAL AXIS OF INCIDENT LIGHT

EP 4 471 399 B1

FIG.5

# FIG.6

(b)

$$b = ((\beta/k)^2 - n_2^2)/(n_1^2 - n_2^2)$$

(a)

WAVELENGTH OF PROPAGATING LIGHT : 850nm

CORE DIAMETER : 8um

NA : 0.1

| CLADDING |
| CORE |

FUNDAMENTAL MODE    FIRST-ORDER MODE

+

$V = 2.96$

$V = \pi d \mathrm{NA}/\lambda$

LP$_{01}$
LP$_{11}$
LP$_{21}$
LP$_{02}$
LP$_{31}$
LP$_{12}$
LP$_{41}$
LP$_{22}$
LP$_{03}$
LP$_{51}$
LP$_{32}$
LP$_{61}$
LP$_{13}$
LP$_{42}$

EP 4 471 399 B1

# FIG.7

## (a)

$Z = 1.476\text{mm}$

$R = 566\text{um}$  $D = 1.458\text{mm}$

## (b)

OPTICAL AXIS MISALIGNMENT

CLADDING

INPUT LIGHT

CORE

CORE DIAMETER : 8um
NA : 0.1

FIG.8

# FIG.9

(a) INPUT LIGHT

CLADDING

CORE

FUNDAMENTAL MODE

(b) INPUT LIGHT

CLADDING

CORE

FUNDAMENTAL MODE    FIRST-ORDER MODE

+

# FIG.10

CASE WHERE LIGHT WAVELENGTH IS 850 nm

Total

FUNDAMENTAL MODE

FIRST-ORDER MODE

COUPLING EFFICIENCY

AMOUNT OF OPTICAL AXIS MISALIGNMENT[um]

# FIG.11

## (a)

FUNDAMENTAL MODE

CLADDING

CORE

LIGHT INTENSITY

## (b)

FUNDAMENTAL MODE

+

FIRST-ORDER MODE

CLADDING

CORE

LIGHT INTENSITY

EP 4 471 399 B1

# FIG.12

EP 4 471 399 B1

F I G . 1 3

EP 4 471 399 B1

# FIG.14 (a)

## FUNDAMENTAL MODE

COLLIMATED LIGHT FORMS NORMAL DISTRIBUTION

## (b)

## FUNDAMENTAL MODE + FIRST-ORDER MODE

COLLIMATED LIGHT DOES NOT FORM NORMAL DISTRIBUTION

EP 4 471 399 B1

# FIG.15

## (a)

FUNDAMENTAL MODE

REGION OF 1/e^2 OR MORE

## (b)

FUNDAMENTAL MODE + FIRST-ORDER MODE

REGION OF 1/e^2 OR MORE

EP 4 471 399 B1

# F I G . 1 6

FUNDAMENTAL MODE: FIRST-ORDER MODE

100 : 0

90 : 10

80 : 20

70 : 30

REGION OF 1/e^2 OR MORE

REGION OF 1/e^2 OR MORE

REGION OF 1/e^2 OR MORE

REGION OF 1/e^2 OR MORE

60 : 40

50 : 50

0 : 100

REGION OF 1/e^2 OR MORE

REGION OF 1/e^2 OR MORE

...

REGION OF 1/e^2 OR MORE

F I G . 1 7

# FIG.18

# FIG.19

# FIG.20

EP 4 471 399 B1

# FIG.21

(a)

FIRST CIRCLE

SECOND CIRCLE

FUNDAMENTAL MODE: FIRST-ORDER MODE

0 : 100

(b)

REGION OF 1/e^2 OR MORE

SECOND CIRCLE

FUNDAMENTAL MODE: FIRST-ORDER MODE

100 : 0

(c)

REGION OF 1/e^2 OR MORE

FIRST CIRCLE

EP 4 471 399 B1

# FIG.22

X SIDE    Y SIDE
q1 q2 q3 q4 q5 q6

(a)

FUNDAMENTAL MODE: FIRST-ORDER MODE
50 : 50

(b) q1    FIRST CIRCLE SECOND CIRCLE

(c) q2    FIRST CIRCLE SECOND CIRCLE

(d) q3    FIRST CIRCLE SECOND CIRCLE

REGION OF 1/e^2 OR MORE

REGION OF 1/e^2 OR MORE

REGION OF 1/e^2 OR MORE

(e) q4    FIRST CIRCLE SECOND CIRCLE

(f) q5    FIRST CIRCLE SECOND CIRCLE

(g) q6    FIRST CIRCLE SECOND CIRCLE

REGION OF 1/e^2 OR MORE

REGION OF 1/e^2 OR MORE

REGION OF 1/e^2 OR MORE

EP 4 471 399 B1

# FIG.23

FUNDAMENTAL MODE: FIRST-ORDER MODE

50 : 50

REGION OF 1/e^2 OR MORE

RADIAL LINE

OPTICAL AXIS
CENTER

9/24 = 37.5%

EP 4 471 399 B1

FIG.24

EP 4 471 399 B1

# FIG.25

EP 4 471 399 B1

FIG.26

FIG.27

EP 4 471 399 B1

# FIG.28

<u>202</u>

(a)

<u>402</u>

(b)

# FIG.29

EP 4 471 399 B1

# FIG.30

50A

TRANSMITTER 200

LIGHT EMITTING SECTION 201

CONNECTOR 202

203

CONNECTOR 501

510

DETERMINER 520

SIGNAL PROCESSING SECTION 521

DISPLAY SECTION 522

EP 4 471 399 B1

EP 4 471 399 B1

FIG.31

INFORMATION REGARDING LIGHT
INTENSITY DISTRIBUTION

# FIG.32

POSITION RESTRICTING PORTION 215
(ZERO POINT)

POSITION RESTRICTING PORTION

EP 4 471 399 B1

# FIG.33

521

SIGNAL PROCESSING SECTION

INFORMATION REGARDING LIGHT
INTENSITY DISTRIBUTION

521a

| 1/e^2 LINE
ACQUISITION SECTION |

521b

| CIRCUMFERENTIAL-
DIRECTION RATIO
CALCULATION SECTION |

521c

| LIGHT DIAMETER
DETERMINATION
SECTION |

DETERMINATION RESULT

# FIG.34

| TRANSMITTER 200 SIDE | | DETERMINER 520 SIDE | |
|---|---|---|---|
| START OUTPUT OF COLLIMATED LIGHT | ST1 | START DETERMINATION PROCESS | ST11 |

INFORMATION CONCERNING START OF OUTPUT OF COLLIMATED LIGHT

| | |
|---|---|
| MONITOR LIGHT INTENSITY DISTRIBUTION OF COLLIMATED LIGHT, AND OBTAIN INFORMATION REGARDING LIGHT INTENSITY DISTRIBUTION THEREOF | ST12 |
| ACQUIRE 1/e^2 LINE | ST13 |
| CALCULATE RATIO OF INCLUSION OF 1/E^2 LINE IN ANNULAR REGION BETWEEN FIRST AND SECOND CIRCLES IN ENTIRE CIRCULAR REGION | ST14 |
| DETERMINE WHETHER OR NOT LIGHT DIAMETER IS WITHIN DEFINED RANGE | ST15 |
| DISPLAY DETERMINATION RESULT | ST16 |

INFORMATION CONCERNING ENDING OF DETERMINATION

| STOP OUTPUT OF COLLIMATED LIGHT | ST2 | END DETERMINATION PROCESS | ST17 |
|---|---|---|---|

# FIG.35

TRANSMITTER 200

LIGHT EMITTING SECTION 201 — 203 — CONNECTOR 202

CONNECTOR 402

400

401

CONNECTOR 403

50B

DETERMINER 530

CONNECTOR 531 — SIGNAL PROCESSING SECTION 532 — DISPLAY SECTION 533

EP 4 471 399 B1

# F I G . 3 6

**EP 4 471 399 B1**

**REFERENCES CITED IN THE DESCRIPTION**

**Patent documents cited in the description**

- WO 2020153236 A
- WO 2021095702 A1
- US 2019339061 A1
- US 2020217750 A1
- CN 110926758 A
- US 5200795 A